(19)

Europäisches
Patentamt

European
Patent Office

Office européen
des brevets

(11) **EP 2 743 062 B1**

(12) **EUROPEAN PATENT SPECIFICATION**

(45) Date of publication and mention
of the grant of the patent:
**20.04.2016 Bulletin 2016/16**

(21) Application number: **12822353.4**

(22) Date of filing: **12.06.2012**

(51) Int Cl.:
**B29C 70/06** *(2006.01)*      **B29C 51/08** *(2006.01)*
**B29C 51/12** *(2006.01)*      **B29C 35/12** *(2006.01)*

(86) International application number:
**PCT/JP2012/064962**

(87) International publication number:
**WO 2013/021719 (14.02.2013 Gazette 2013/07)**

(54) **FIBER REINFORCED COMPOSITE PANEL SHAPING METHOD**

FORMUNGSVERFAHREN FÜR EINE FASERVERSTÄRKTE VERBUNDPLATTE

PROCÉDÉ DE FORMAGE D'UN PANNEAU COMPOSITE RENFORCÉ DE FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2011 JP 2011173682
26.03.2012 JP 2012069470**

(43) Date of publication of application:
**18.06.2014 Bulletin 2014/25**

(73) Proprietor: **The Foundation for the Promotion of
Industrial
Science
Tokyo 153-8505 (JP)**

(72) Inventors:
• **YANAGIMOTO Jun**
**Tokyo 153-8505 (JP)**
• **IKEUCHI Katsuyoshi**
**Tokyo 153-8505 (JP)**

(74) Representative: **Dr. Weitzel & Partner
Patent- und Rechtsanwälte mbB
Friedenstrasse 10
89522 Heidenheim (DE)**

(56) References cited:
**JP-A- 7 047 596      JP-A- 9 277 387
JP-A- 51 137 753      JP-A- 2009 196 145
US-A- 5 530 227**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

TECHNICAL FIELD

The present invention relates to a shaping method of a fiber reinforced composite panel.

BACKGROUND ART

Conventionally, it has been a widely employed method of shaping a product into a desired shape to place a fiber reinforced composite panel, such as a pre-preg, which is a cloth of reinforcing fibers impregnated with resin, on a metallic die, and to hot-form the panel under low pressure or vacuum condition within an autoclave apparatus.
Thereby, it has been possible to achieve a variety of shaped products in complicated shapes and made of fiber reinforced plastics, which are light and of high strength.

PRIOR ART DOCUMENT

PATENT DOCUMENTS

Patent Document 1: Japanese Patent Application Laid-Open (*kokai*) No. 2009-184239 (JP 2009-184239 A). US-A-5530227 discloses the features of the preamble of claim 1.

DISCLOSURE OF THE INVENTION

PROBLEMS TO BE SOLVED BY THE INVENTION

However, in the aforementioned conventional shaping method, an apparatus of large size and high price, such as an autoclave apparatus, is needed and processes employed therein are complicated, since it is necessary to heat the fiber reinforced composite panel on the metallic die up to high temperature, and to clamp it under low pressure or vacuum condition. Therefore, a mass production of products is difficult and at a high cost.
An object of the present invention is to solve the above-mentioned problems of in the conventional shaping method and to provide a shaping method of fiber reinforced composite panel, which, by shaping a fiber reinforced composite panel in a state where at least one surface thereof is in contact with a metal plate, enables easy, quick, low-cost and stable deformation of the fiber reinforced composite panel, and enables manufacture of various shapes of a good quality product less-expensively and in great quantity, without any appearance of fracture or of local irregularity deformation, such as necking, in any portion of the fiber reinforced composite panel.

MEANS FOR SOLVING PROBLEMS

Accordingly, the present invention provides a shaping method of fiber reinforced composite panel for shaping a plate-shaped fiber reinforced composite panel as defined in claim 1.
In a preferred embodiment of the shaping method of fiber reinforced composite panel, the fiber reinforced composite panel is heated indirectly by heating the metal plate.
In yet another preferred embodiment of the shaping method of fiber reinforced composite panel, the metal plate is heated by an induction heating.
In yet another preferred embodiment of the shaping method of fiber reinforced composite panel, after heating the fiber reinforced composite panel to a predetermined temperature, the metallic dies are worked to clamp the fiber reinforced composite panel, and the fiber reinforced composite panel is cooled with being clamped.
In yet another preferred embodiment of the shaping method of fiber reinforced composite panel, after being heated to the predetermined temperature, the fiber reinforced composite panel is heated to maintain the predetermined temperature until an initial stage of being clamped.
In yet another preferred embodiment of the shaping method of fiber reinforced composite panel, the fiber reinforced composite panel is a plate-shaped composite, which is made by impregnating fibers as reinforcing material with a resin as matrix.

EFFECTS OF THE INVENTION

According to the present invention, in a shaping method of fiber reinforced composite panel, a fiber reinforced composite panel is shaped in a state where at least one surface of the panel is in contact with a metal plate. Thereby, the fiber reinforced composite panel is able to be deformed easily, quickly, at low-cost and stably without any appearance of fracture or of local irregularity deformation, such as necking, in any portion of the fiber reinforced composite panel, and various shapes of a good quality product can be manufactured less-expensively and in great quantity.

BRIEF DESCRIPTION OF THE DRAWINGS

FIG. 1 is a view showing a shaping apparatus employed for a shaping method of fiber reinforced composite panel in a first embodiment of the present invention.

FIG. 2 is a set of views showing examples of metallic dies employed for the shaping method of fiber reinforced composite panel in the first embodiment of the present invention.

FIG. 3 is a set of schematic views showing the shaping method of fiber reinforced composite panel in the first embodiment of the present invention.

FIG. 4 is a view showing a specific example of metallic dies employed for the shaping method of fiber reinforced composite panel in the first embodiment of the present invention.

FIG. 5 is a view showing a specific example of a fiber reinforced composite panel shaped by the shaping method of fiber reinforced composite panel in the first embodiment of the present invention.

FIG. 6 is a graph showing varying of temperature and the metallic dies stroke in the shaping method of fiber reinforced composite panel in the first embodiment of the present invention.

FIG. 7 is a graph showing a relation between shaping temperature and spring-back of Example 1 in the first embodiment of the present invention.

FIG. 8 is a set of photographs showing Example 1 in a case where the shaping temperature is normal in the first embodiment of the present invention.

FIG. 9 is a set of photographs showing side views of Example 1 in a case where the shaping temperature is normal in the first embodiment of the present invention.

FIG. 10 is a set of photographs showing Example 1 in a case where the shaping temperature is 200 [°C] in the first embodiment of the present invention.

FIG. 11 is a set of photographs showing side views of Example 1 in a case where the shaping temperature is 200 [°C] in the first embodiment of the present invention.

FIG. 12 is a graph showing a relation between shaping temperature and spring-back of Example 2 in the first embodiment of the present invention.

FIG. 13 is a set of photographs showing Example 2 in a case where the shaping temperature is normal in the first embodiment of the present invention.

FIG. 14 is a set of photographs showing Example 2 in a case where the shaping temperature is 200 [°C] in the first embodiment of the present invention.

FIG. 15 is a set of photographs showing side views of Example 2 in a case where the shaping temperature is 200 [°C] in the first embodiment of the present invention.

FIG. 16 is a set of enlarged photographs showing cloth used for shaping Example 3 in the first embodiment of the present invention.

FIG. 17 is a graph showing a relation between shaping temperature and spring-back of Examples 3 and 4 in the first embodiment of the present invention.

FIG. 18 is a graph showing changes of temperature and the metallic dies stroke in a case of shaping Example 4 at shaping temperature of 200 [°C] in the first embodiment of the present invention.

FIG. 19 is a set of photographs showing Example 3 in the first embodiment of the present invention.

FIG. 20 is a photograph showing Example 4 in the first embodiment of the present invention.

FIG. 21 is a set of photographs showing side views of Example 3 in the first embodiment of the present invention.

FIG. 22 is a set of schematic views showing the shaping method of fiber reinforced composite panel in a second embodiment of the present invention.

FIG. 23 is a set of views showing a specific example of metallic dies employed for the shaping method of fiber reinforced composite panel in the second embodiment of the present invention.

FIG. 24 is a set of views illustrating Examples 5 and 6 in the second embodiment of the present invention.

FIG. 25 is a set of photographs showing Example 5 in the second embodiment of the present invention.

FIG. 26 is a set of photographs showing Example 6 in the second embodiment of the present invention.

FIG. 27 is a set of graphs showing relations between shaping temperature and drawing stroke of Examples 5 and 6 in the second embodiment of the present invention.

FIG. 28 is a view illustrating mechanisms for achieving good formability in the second embodiment of the present invention.

FIG. 29 is a set of photographs showing sectional views of Example 6 in the second embodiment of the present invention.

FIG. 30 is a set of first graphs showing measured varying of upper metallic die stroke and shaping load in a third embodiment of the present invention.

FIG. 31 is a set of schematic views showing sectional views of metallic dies used for the shaping method of fiber reinforced composite panel in the third embodiment of the present invention.

FIG. 32 is a second graph showing measured varying of upper metallic die stroke and shaping load in the third embodiment of the present invention.

FIG. 33 is a third graph showing measured varying of upper metallic die stroke and shaping load in the third embodiment of the present invention.

FIG. 34 is a set of views showing a shaping apparatus employed for the shaping method of fiber reinforced composite panel in a fourth embodiment of the present invention.

FIG. 35 is a set of photographs showing samples in the fourth embodiment of the present invention.

FIG. 36 is a set of views illustrating material panels for shaping in a fifth embodiment of the present invention.

FIG. 37 is a set of photographs showing samples resulted from drawing first simplified material plates in the fifth embodiment of the present invention.

FIG. 38 is a set of photographs showing samples resulted from drawing second simplified material plates in the fifth embodiment of the present invention.

FIG. 39 is a set of photographs showing reference examples resulted from drawing without using a metal plate in the fifth embodiment of the present invention.

FIG. 40 is a set of photographs showing samples resulted from bending first simplified material plates in the fifth embodiment of the present invention.

FIG. 41 is a set of photographs showing samples resulted from bending second simplified material plates in the fifth embodiment of the present invention.

BEST MODES FOR CARRYING OUT THE INVENTION

Embodiments of the present invention will now be described in detail with reference to the drawings.

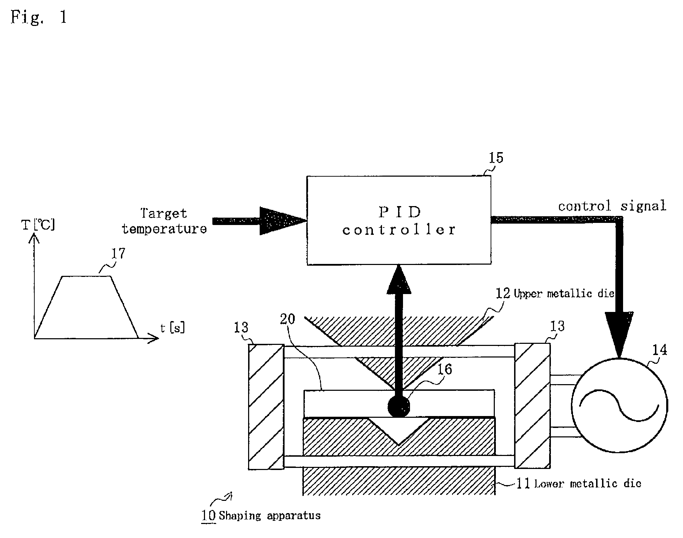

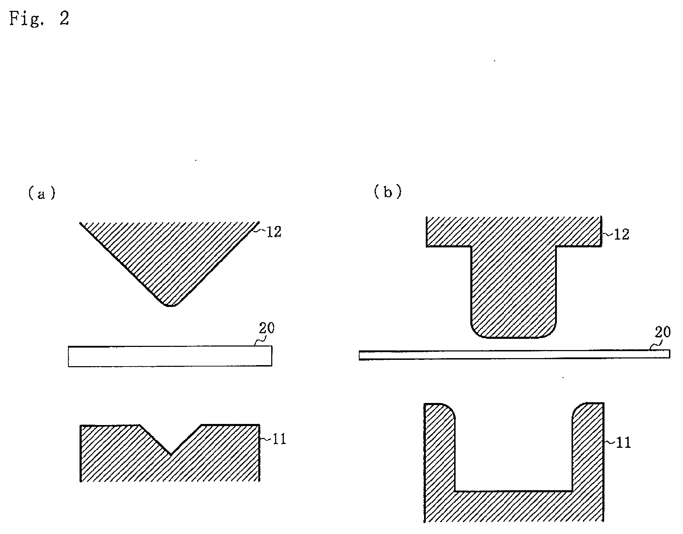

FIG. 1 is a view showing a shaping apparatus employed for a shaping method of fiber reinforced composite panel in a first embodiment of the present invention. FIG. 2 is a set of views showing examples of metallic dies employed for the shaping method of fiber reinforced composite panel in the first embodiment of the present invention. In FIG. 2, (a) shows a first example and (b) shows a second example.

In the respective figures, the reference numeral 10 designates a shaping apparatus in the present embodiment, and has a lower metallic die 11 which serves as a fixed die and an upper metallic die 12 which serves as a moving die or a punch. The lower metallic die 11 is fixed on a non-graphically illustrated apparatus body etc. of the shaping apparatus 10. On the other hand, the upper metallic die 12 is installed in a vertically movable manner and is displaced vertically by an actuator, such as a hydraulic cylinder, so that it attaches to and detaches from the lower metallic die 11.

The reference numeral 20 designates a material panel to be shaped through being sandwiched between the lower metallic die 11 and the upper metallic die 12 and being pressed on its both sides by them, and the material panel 20 includes a fiber reinforced composite panel 21, mentioned below, and metal plates 22, which contact on both sides of the fiber reinforced composite panel 21.

In the present embodiment, the fiber reinforced composite panel 21 is a plate-like composite member made of fibers, which serves as reinforce members, impregnated with resin, which serves as matrix. The fibers may be, for example, carbon fibers, glass fibers, etc. or any kind of fibers. Notably, the fibers have been preferably prepared as being woven into a form of cloth. On the other hand, the resin may be thermoplastics, such as polyethylene, polypropylene, nylon, and polystyrene, etc. or may be thermoset resin, such as epoxy, phenol, melamine, unsaturated polyester, etc.

Each of the metal plates 22 may be a plate of metal, such as, such as aluminum alloy, stainless steel, mild steel, copper, etc. or any kind of metal.

The shaping apparatus 10 includes a set of induction heating coils 13 serving as a heating device, a power unit 14 serving as an energy source for supplying electric power to the induction heating coils 13, and a heat controller 15 for controlling the operation of the power unit 14.

In the present embodiment, the heating device for heating the fiber reinforced composite panel 21 may be a direct heating device, which heats directly the fiber reinforced composite panel 21 using an electric heater such as a sheath heater, or an infrared heater, but preferably may be an indirect heating device, which heats the metal plats 22 so as to heat indirectly the fiber reinforced composite panel 21 through thermal conduction from the metal plates 22. The fiber reinforced composite panel 21 can be heated uniformly by indirect heating rather than direct heating. Therefore, the present embodiment employs a set of induction heating coils 13 as the indirect heating device for heating indirectly the fiber reinforced composite panel 21 and the induction heating coils 13 are typically disposed on the sides of the lower metallic die 11 and the upper metallic die 12.

The metal plates 22 of the fiber reinforced composite panel 21 sandwiched between the lower metallic die 11 and the upper metallic die 12 are induction heated by the induction heating coils 13. Therefore, the induction heating coils 13 are preferably disposed in places not far from the material panel 20, that is, in places near the lower metallic die 11 and the upper metallic die 12.

Notably, the induction heating coils 13 are preferably disposed on the both sides of the lower metallic die 11 and the upper metallic die 12, as shown in FIG. 1, though may be disposed on one side thereof or on another place. Also the induction heating coils 13 may be replaced by electric heaters such as sheath heaters, or infrared heaters, as the heating device for heating the metal plates 22. Notably, when the induction heating coils 13 are employed, the metal plates 22 are heated more uniformly and more promptly so that heating time becomes shorter.

The heat controller 15 controls electric energy supplied to the induction heating coils 13, through controlling the operation of the power unit 14, based on detecting signals of a thermal detector 16 and a target temperature 17 inputted, so that the temperature of the fiber reinforced composite panel 21 reaches the target temperature 17.

Since it is a device for detecting the temperature of the fiber reinforced composite panel 21, preferably the thermal detector 16 detects directly the temperature of the fiber reinforced composite panel 21, but may detect the temperature of metal plates 22. In another word, the thermal detector 16 may detect the temperature of any part of the material panel 20. Also, preferably the thermal detector 16 is a device for detecting the temperature of an object, such as the material panel 20, in a non-contact manner based on color of the object, on infrared ray from the object, etc., but may be a device for detecting the temperature of an object by contacting the object. Further, the target temperature 17 preferably varies according to the time, as shown in FIG. 1, but may remain at constant value.

The heat controller 15 is a kind of computer including a processing means, such as CPU, MPU, etc., a storage means, such as semiconductor memory, a magnetic disk, etc., an input means, such as a keyboard, etc., a displaying means, such as a CRT, a LCD, etc., a communication interface, etc. And the heat controller 15 controls the operation of the power unit 14, for example through a PID control, so that the temperature of the fiber reinforced composite panel 21 reaches the target temperature 17. Notably, the heat controller 15 may be constituted integrally with a shaping apparatus control device (not shown) for controlling the whole operation of the shaping apparatus 10, or may be constituted separately from the shaping apparatus control device.

Faces of the lower metallic die 11 and the upper metallic die 12 have shapes, for example, as shown in FIGS. 2(a) and 2(b), but may have any shapes and may have various shapes according to achieved shapes of the material panels 20 through various processes of shaping. FIG. 2(a) shows an example of bending the material panels 20 at a desired angle (for example, 90 degrees). FIG. 2(b) shows an example of bending the material panels 20 into a U-shape or a hat-shape.

Notably, in examples shown in FIGS. 1 and 2, the lower metallic die 11 is a female die with a concave face and the upper metallic die 12 is a male die with a convex face, though the lower metallic die 11 may be the male die and the upper metallic die 12 may be the female die. Also the lower metallic die 11 may be a moving die and the upper metallic die 12 may be a fixed die, or both may be moving dies.

Next will be described a method for shaping the fiber reinforced composite panel 21 according to the present embodiment.

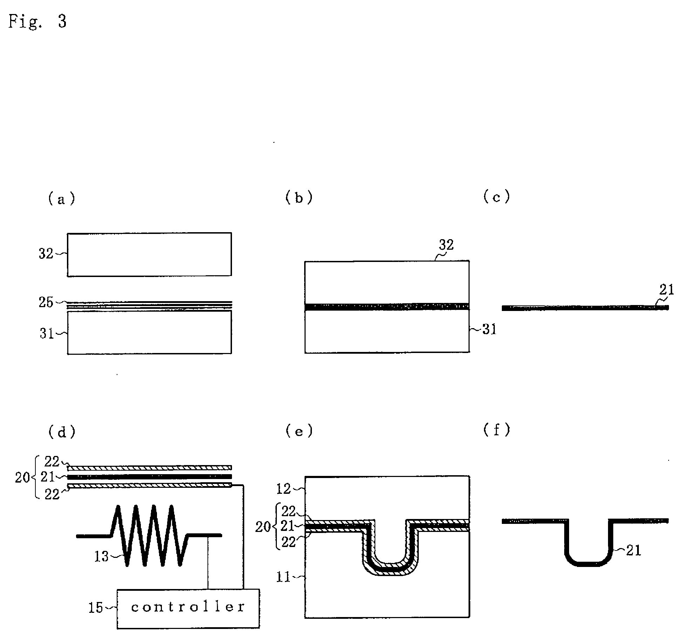

FIG. 3 is a set of schematic views showing the shaping method of fiber reinforced composite panel in the first embodiment of the present invention. In FIG. 3, each of (a)-(c) shows each of processes in a preparing method of fiber reinforced composite panel, and each of (d)-(f) shows each of processes in the shaping method of fiber reinforced composite panel.

First, a method of preparing the fiber reinforced composite panel 21 serving as a primary product will be explained.

As shown in FIG. 3(a), a cloth(s) 25, which is made of woven fiber, is placed on a face of a lower metallic die 31 for forming composite panel. In this case, several cloths 25 are preferably placed in a laminated fashion, though just one cloth 25 may be placed. Notably, the cloth 25 includes resin serving as a matrix. The face of the lower metallic die 31 for forming composite panel is plane and, also, a face of an upper metallic die 32 for forming composite panel is plane.

Then, an actuator (not shown) is operated so as to displace the upper metallic die 32 for forming composite panel downwardly, so that one or laminated several of the cloths 25 are sandwiched and clamped from above and below by the upper metallic die 32 and the lower metallic die 31 for forming composite panel as shown in FIG. 3(b). In this case, an apparatus such as an autoclave apparatus is employed and clamping is performed under a vacuum or decompressed but heated high temperature condition. Thereby, the resin as matrix is melted to enter spaces among fibers of the laminated cloths 25, so as to impregnate uniformly therein.

After the cloths 25 uniformly impregnated with the resin is cooled down to a normal temperature (or room temperature), the fiber reinforced composite panel 21 in a plate-like shape, which is an integrated composite of fiber and resin, is obtained, as shown in FIG. 3(c).

Notably, as the fiber reinforced composite panel 21, a marketed product called such as a pre-preg, a stampable sheet, etc. can also be employed. In such a case, the processes shown in FIGS. 3(a)-(c) are omitted.

Next, a method for shaping the fiber reinforced composite panel 21 into a desired shape will be explained.

As shown in FIG. 3(d), the material panel 20 is obtained after the metal plates 22 are attached onto both top and bottom sides of the fiber reinforced composite panel 21. The material panel 20 is placed on the face of lower metallic die 11 of the shaping apparatus 10 and its metal plates 22 are induction heated by the induction heating coils 13 supplied with electric power, so that the fiber reinforced composite panel 21 is heated indirectly. In this case, the heat controller 15 controls the electric energy supplied to the induction heating coils 13 so that the temperature of the fiber reinforced composite panel 21 reaches the target temperature 17. The target temperature 17 preferably corresponds to a temperature at which the temperature of the fiber reinforced composite panel 21 reaches around the melting point of its resin.

Notably, when the fiber reinforced composite panel 21 is heated indirectly, the material panel 20 is not necessarily placed on the face of lower metallic die 11 but can be placed apart from the lower metallic die 11. That is, as long as the fiber reinforced composite panel 21 is possible to be heated indirectly by energizing the induction heating coils 13 and performing induction heating of the metal plates 22, the material panel 20 may be placed anywhere.

Then, the actuator (not shown) of the shaping apparatus 10 is operated so as to displace the upper metallic die 12 downwardly, so that one material panel 20 in a plate-like shape is sandwiched and clamped from above and below by the upper metallic die 12 and the lower metallic die 11 as shown in FIG. 3(e). In the example shown in FIG. 3(e), the face shapes of the upper metallic die 12 and the lower metallic die 11 are like as shown in FIG. 2(b).

Notably, indirect heating of the fiber reinforced composite panel 21 may be continued in an early or a middle stage of clamping by the upper metallic die 12 and the lower metallic die 11. Since heat capacities of the upper metallic die 12 and the lower metallic die 11 are in general much larger than that of the material panel 20, heat can be taken by the upper metallic die 12 and the lower metallic die 11 during the clamping so that the temperature of the fiber reinforced composite panel 21 can be much lower than the desired one. Therefore, if needed, energy supply to the induction heating coils 13 can be continued so as to continue indirect heating of the fiber reinforced composite panel 21 during the clamping, so that the temperature of the fiber reinforced composite panel 21 can be kept at a predetermined value.

Then, the material panel 20 is cooled down while the clamping is continued. As mentioned above, since heat capacities of the upper metallic die 12 and the lower metallic die 11 are in general much larger than that of the material panel 20, heat is taken by the upper metallic die 12 and the lower metallic die 11 so that the material panel 20 is cooled down automatically. Even if indirect heating of the fiber reinforced composite panel 21 is continued during the early or a middle stage of clamping, the energy supply to the induction heating coils 13 is cut to finish the heating during the cooling.

When the material panel 20 is cooled down to the normal temperature (or room temperature), the actuator (not shown) of the shaping apparatus 10 is operated so as to displace the upper metallic die 12 upwardly, so that a gap between the upper metallic die 12 and the lower metallic die 11 becomes wide and open, and the material panel 20 is brought out from the gap between the upper metallic die 12 and the lower metallic die 11.

Thereby, the material panel 20, which is shaped corresponding to the faces of the upper metallic die 12 and the lower metallic die 11, can be obtained. Then, after the metal plates 22 are removed from both its upper and lower sides, the fiber reinforced composite panel 21 in a desired shape as an end product can be obtained, as shown in FIG. 3 (f).

An example, wherein the fiber reinforced composite panel 21 is heated indirectly when it is shaped into a desired shape, has been explained, though the indirect heating of the fiber reinforced composite panel 21 may be omitted. That is, while the temperature of the fiber reinforced composite panel 21 is not raised but kept at the normal temperature (or room temperature) the material panel 20 can be clamped by the upper metallic die 12 and the lower metallic die 11, so that the material panel 20 shaped corresponding to the faces of the upper metallic die 12 and the lower metallic die 11 can be obtained. In this case, times necessary before and after molding duration can be shortened, since the time for raising the temperature of the fiber reinforced composite panel 21 by indirect heating, and the time for lowering its temperature by cooling become unnecessary. Also, cost can be reduced, since the induction heating coils 13, the power unit 14, the heat controller 15, etc. are omitted.

Next will be described a specific example according to the present embodiment.

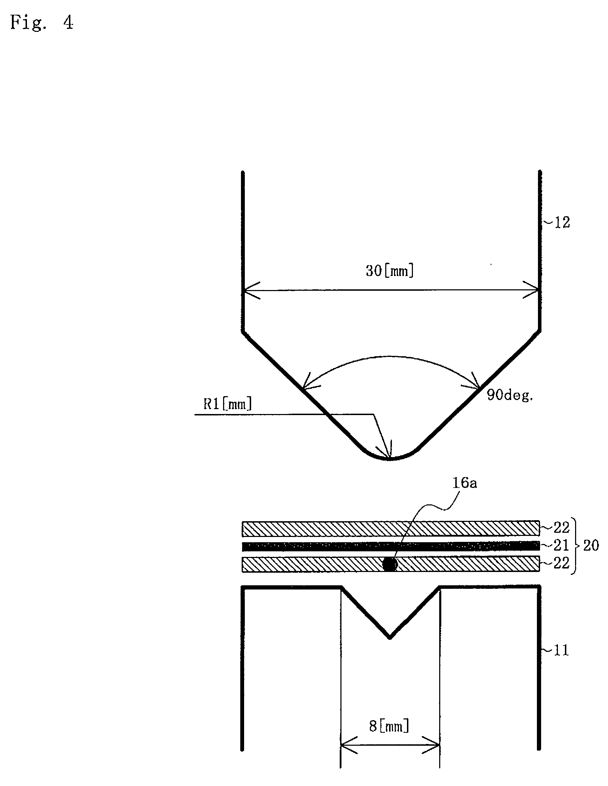

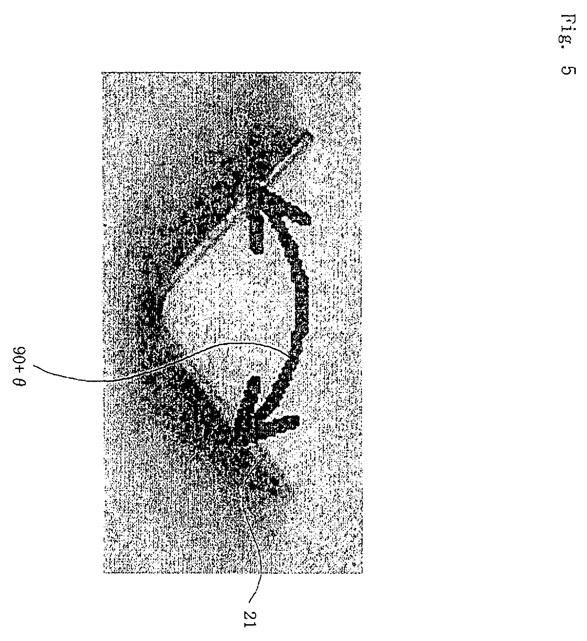

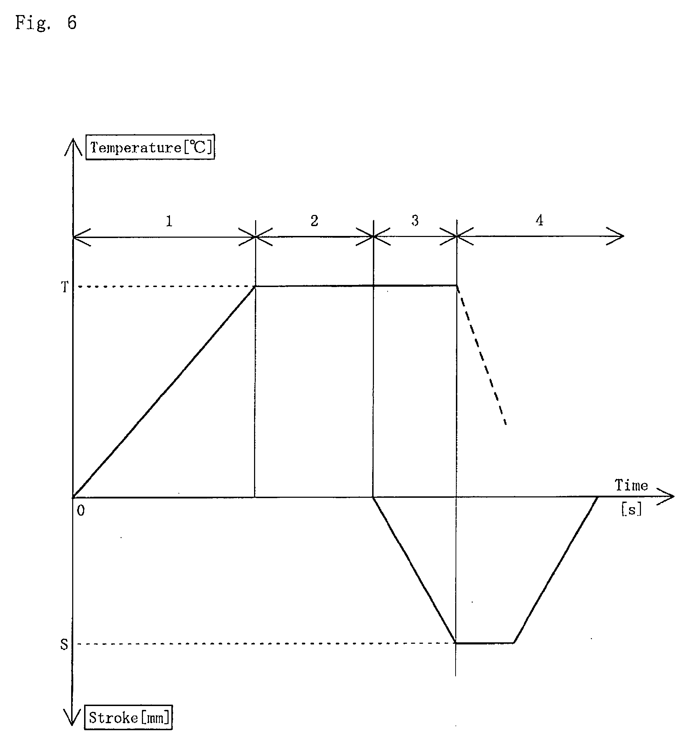

FIG. 4 is a view showing a specific example of metallic dies employed for the shaping method of fiber reinforced composite panel in the first embodiment of the present invention. FIG. 5 is a view showing a specific example of a fiber reinforced composite panel shaped by the shaping method of fiber reinforced composite panel in the first embodiment of the present invention. FIG. 6 is a graph showing varying of temperature and the metallic dies stroke in the shaping method of fiber reinforced composite panel in the first embodiment of the present invention.

The present inventors have really processed shaping of the material panel 20 employing the dies as shown in FIG. 4. In this case, the faces of the upper metallic die 12 and the lower metallic die 11 are the same as FIG. 2(a) and are employed for bending plate materials at an angle of 90 degrees. Therefore, a concave groove with a V-shape cross section of 90 degrees is formed on the face of the lower metallic die 11, and a width of the concave groove is 8 [mm]. The upper metallic die 12 has a width of 30 [mm], its face has a shape of convex streak with a V-shape cross section of 90 degrees, and a cross section of the top of the convex streak or the ridge part has a curved surface with a radius of 1 [mm].

The material panel 20 is a rectangular plate of 30 [mm] in length and 10 [mm] in width. Its thickness varies according to a thickness of the fiber reinforced composite panel 21. The material panel 20 is placed for being processed on the face of the lower metallic die 11 in such a position as its longitudinal direction corresponds to the left-right direction in FIG. 4, or the width direction of the upper metallic die 12 and the lower metallic die 11.

Each of the metal plates 22 attached onto both top and bottom sides of the fiber reinforced composite panel 21 is a rectangular plate of 30 [mm] in length, 10 [mm] in width, and 1 [mm] in thickness. It is specifically a steel plate, which is made of mild steel, called as SPCC, and is a cold-rolled steel plate stipulated in JISG3141, or a plate of super duralumin, which is a kind of aluminum alloy, called as A2024 in JIS, and is stipulated in JISH4000 etc. The following Table 1 indicates the properties of the cold-rolled steel plate and the super duralumin.

[Table 1]

| Metal plate | Cold-rolled steel plate SPCC | Super duralumin A2024 |
|---|---|---|
| Tensile strength [MPa] | 300 | 500 |
| Young's modulus [GPa] | 210 | 47 |
| Heat Capacity [J/K] | 1.1 | 0.76 |

The fiber reinforced composite panel 21 is a rectangular plate of 30 [mm] in length and 10 [mm] in width, and its thickness varies depending on its variety, as later mentioned. Then, a bend radius of the fiber reinforced composite panel 21 as a result of bending becomes 2 [mm], since the metal plate 22 of 1 [mm] thickness intervenes between the fiber reinforced composite panel 21 and the upper metallic die 12.

As shown in FIG. 4, the actual place where the temperature of fiber reinforced composite panel 21 is detected by the thermal detector 16, or a thermo-control point 16a is located around the center of length in the lower metal plate 22.

After the process of shaping, the bend angle of the fiber reinforced composite panel 21, bent into a V-shape as an end product, is measured, then the difference $\theta$ between the measured bend angle of the fiber reinforced composite panel 21 and the angle (90 degrees) of the face of the upper metallic die 12 is defined as a value of spring-back of the end product, as shown in FIG. 5.

In shaping the material panel 20, the temperature of the fiber reinforced composite panel 21 and the stroke of the upper metallic die 12 displaced by the actuator have been controlled as shown in FIG. 6. In FIG. 6, a horizontal axis is a time-axis indicating time (unit [second]), a vertical axis over the horizontal axis is a temperature-axis indicating temperature (unit [°C]), and a vertical axis under the horizontal axis is a stroke-axis indicating stroke (unit [mm]) of the upper metallic die 12 or downward displacement of the upper metallic die 12. Then, the polygonal line shown in a solid line over the horizontal axis is a temperature-variation line indicating temperature variation of the fiber reinforced composite panel 21, and the polygonal line shown in a solid line under the horizontal axis is a stroke-variation line indicating stroke of the upper metallic die 12. In FIG. 6, the origin (O-point) of a temperature-axis corresponds to the normal temperature (or room temperature).

T is a shaping temperature designated by the target temperature 17 inputted, and, as mentioned below, is specifically a set of temperatures of six kinds, such as the normal temperature (or room temperature), 50 [°C], 100 [°C], 150 [°C], 200 [°C], and 250 [°C]. The normal temperature (or room temperature) is about 20 [°C]. When T is the normal temperature (or room temperature), indirect heating of the fiber reinforced composite panel 21 is omitted as mentioned above, and any thermo-control is not performed.

Then, indirect heating of the fiber reinforced composite panel 21 has been performed through placing the material panel 20 on the face of lower metallic die 11 of the shaping apparatus 10 and through supplying electric power to the induction heating coils 13 so as to induction heat its metal plates 22. During the period 1 in FIG. 6, the thermo-control has been carried out so that the temperature rises at a heating rate of 50 [°C/s] from the normal temperature (or room temperature) to the predetermined shaping temperature T designated.

Then, during the periods 2 and 3 in FIG. 6, the temperature control has been carried out so as to maintain the designated forming temperature T. Notably, during the periods 1 and 2, the upper metallic die 12 has stayed still at its top dead center. The duration of period 2 is about 10 [seconds].

During the period 3, the upper metallic die 12 has been displaced downwardly by the actuator at a traveling speed of 1 [mm/s]. Thereby, the material panel 20 has been sandwiched from above and below by the upper metallic die 12 and the lower metallic die 11 and its part around the center of length has been pushed down to be bent by the convex streak in the face of the upper metallic die 12. And, when the stroke of upper metallic die 12 has reached its maximum S, the upper metallic die 12 has reached its bottom dead center to stop. Thereby, the material panel 20 has been bent into a V-shape of 90 degrees, along the concave groove with a V-shape in the face of the lower metallic die 11 and the convex streak with a V-shape cross section in the face of the upper metallic die 12.

Then, during the period 4 in FIG. 6, indirect heating of the fiber reinforced composite panel 21 has been suspended. Thereby, the temperature of the fiber reinforced composite panel 21 has decreased as indicated by a dotted line. That is, the material panel 20 including the fiber reinforced composite panel 21 has been cooled down automatically. Also, during 30 [seconds] in early stage of the period 4, the upper metallic die 12 has been maintained at its bottom dead center. Therefore, the material panel 20 has been cooled down with being clamped from above and below by the upper metallic die 12 and the lower metallic die 11 during this 30 [seconds] in early stage of the period 4. In this case, the material panel 20 has been cooled down effectively, since both sides of it contact the faces of the upper metallic die 12 and the lower metallic die 11 so that the heat is taken from it by the upper metallic die 12 and the lower metallic die 11.

After this 30 [seconds] in early stage, the upper metallic die 12 has been displaced upwardly back to its top dead center by the actuator at a traveling speed of 1 [mm/s]. Then the gap between the upper metallic die 12 and the lower metallic die 11 has become so wide that the material panel 20 is brought out from there. Then, the metal plates 22 have been removed from this material panel 20, so that the fiber reinforced composite panel 21 in a V-shape bent as an end product has been obtained, as shown in FIG. 5.

Providing that the upper metallic die 12 was not maintained at its bottom dead center during 30 [seconds] in early stage of the period 4, that is, providing that the upper metallic die 12 went back up to its top dead center just after reaching its bottom dead center, any fiber reinforced composite panel 21 of good condition would not been obtained. It is because that its resin serving as matrix would be soften and molten by heating the fiber reinforced composite panel 21, that its surfaces would be detached and deformed when load is eliminated as the resin being soften and molten by displacing the upper metallic die 12 upwardly just after bending of the material panel 20, and that the deformation would be kept as a result of resin solidification by cooling down automatically the fiber reinforced composite panel 21.

Therefore, in the present specific example, as mentioned above, the material panel 20 has been cooled down automatically with the upper metallic die 12 being maintained at its bottom dead center during 30 [seconds] in early stage of the period 4. Accordingly, the fiber reinforced composite panel 21 in a good condition of V-shape bent has been obtained, since the upper metallic die 12 has been displaced upwardly so as to eliminate the load after the fiber reinforced composite panel 21 being cooled down fully.

Next will be described the fiber reinforced composite panels 21 actually shaped according to the specific example. Examples 1 and 2 will be described first.

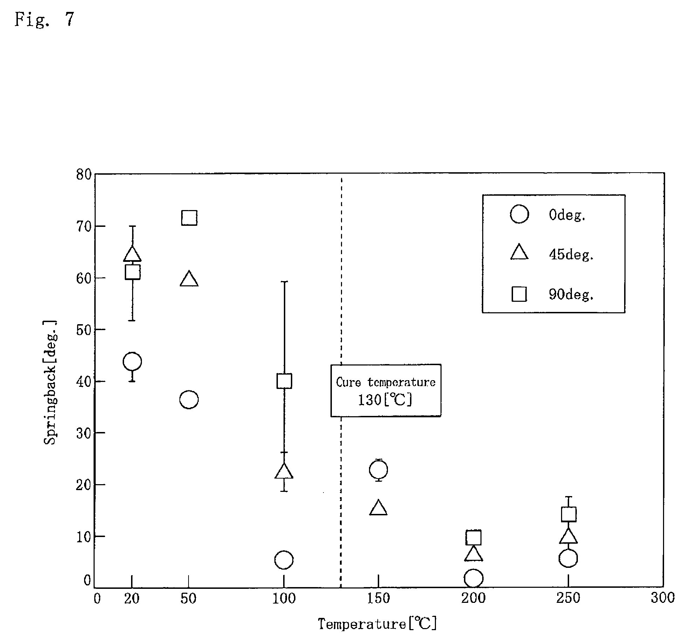

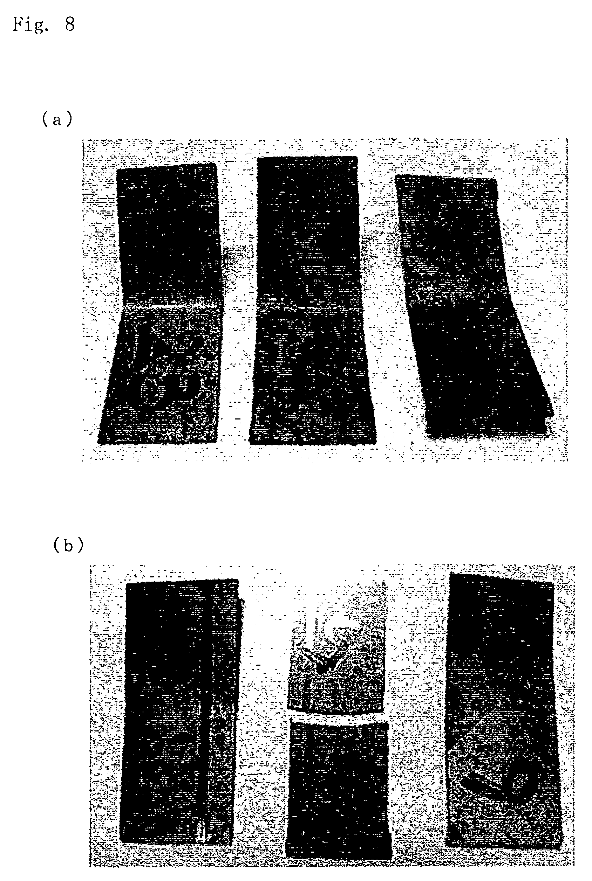

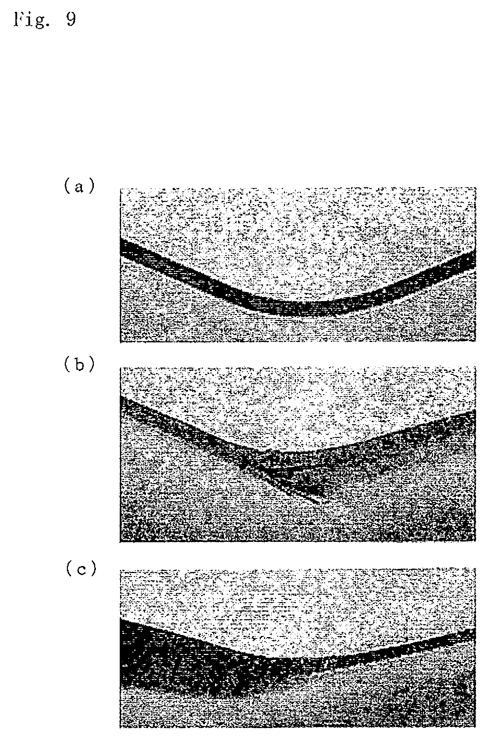

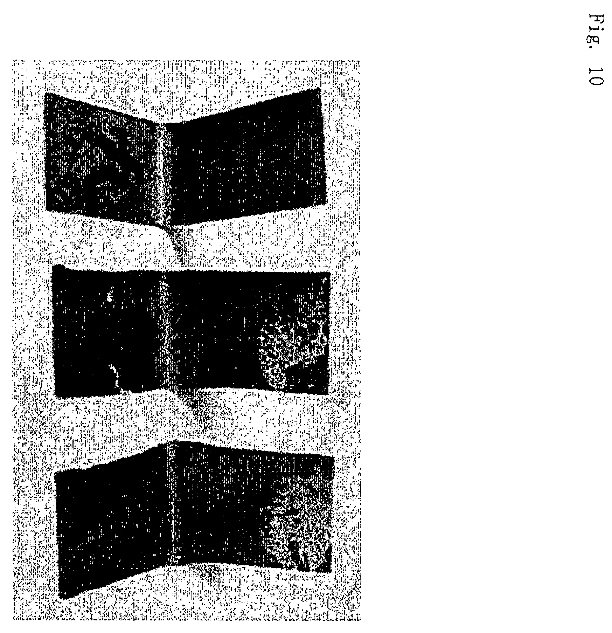

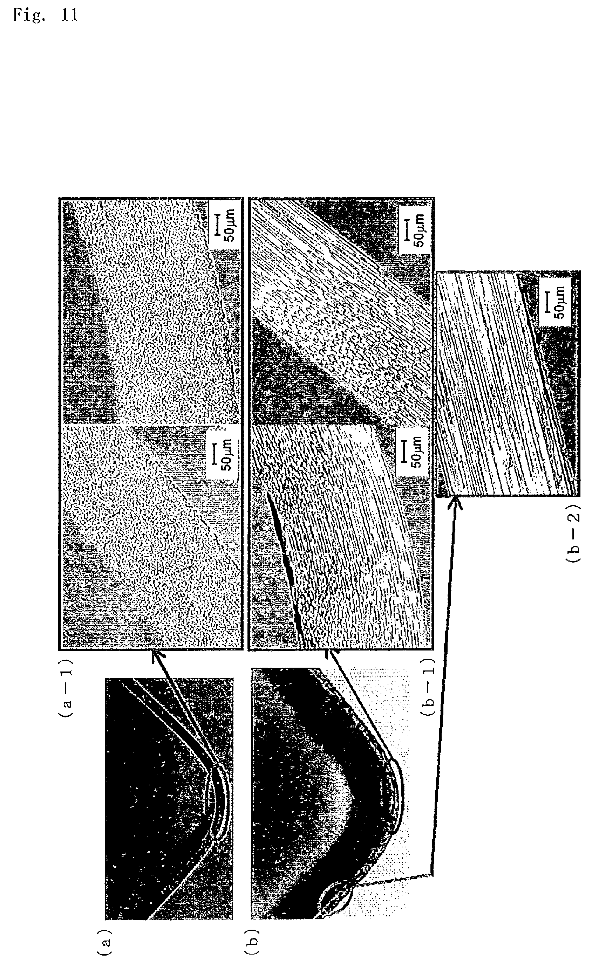

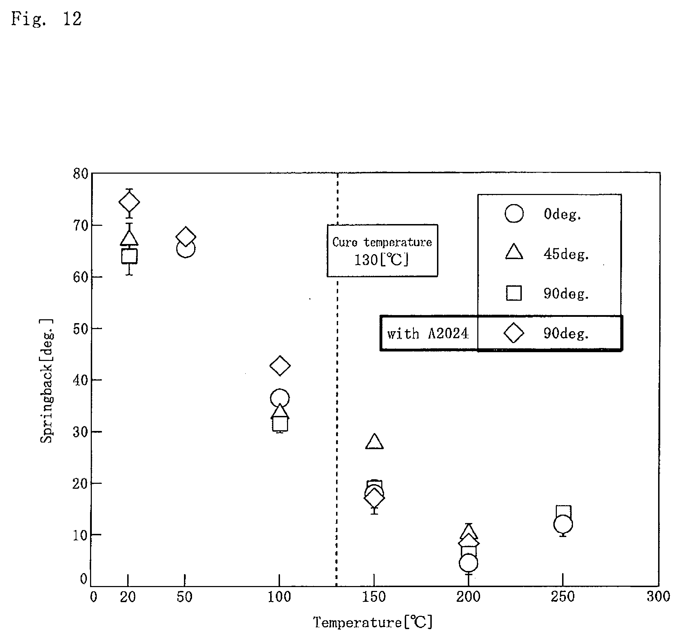

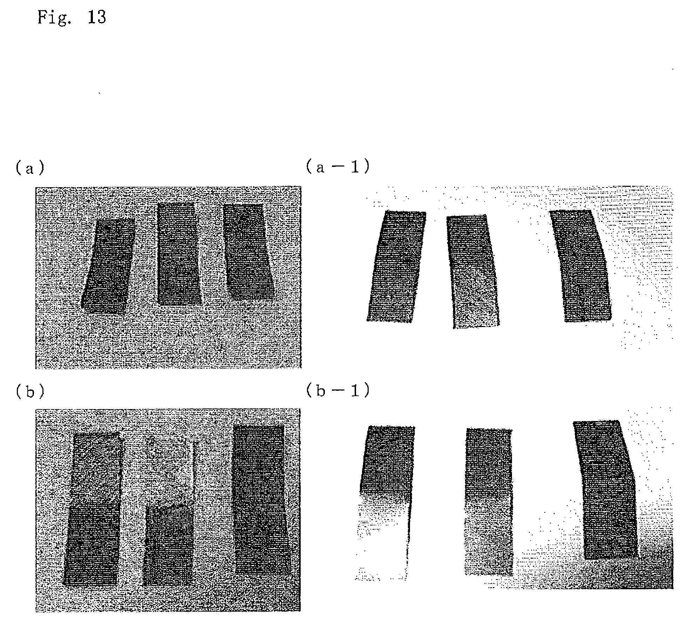

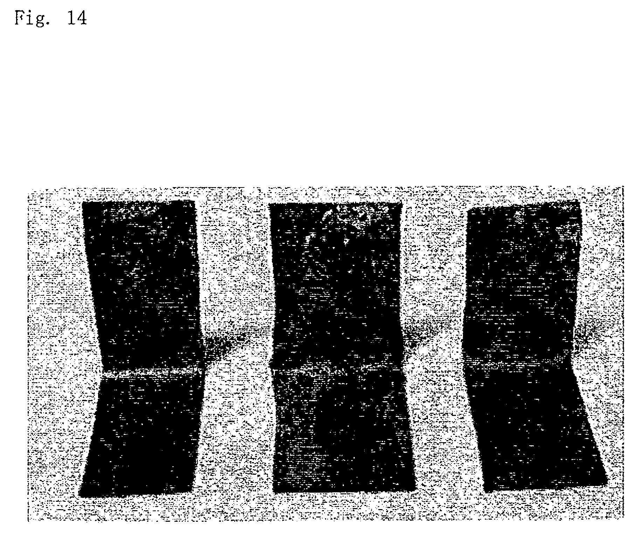

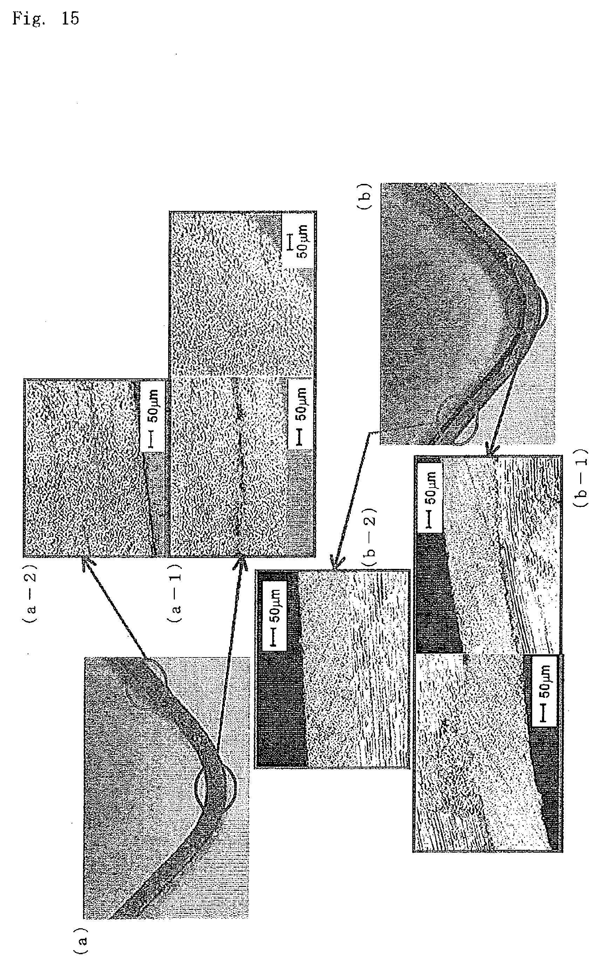

FIG. 7 is a graph showing a relation between shaping temperature and spring-back of Example 1 in the first embodiment of the present invention. FIG. 8 is a set of photographs showing Example 1 in a case where the shaping temperature is normal in the first embodiment of the present invention. FIG. 9 is a set of photographs showing side views of Example 1 in a case where the shaping temperature is normal in the first embodiment of the present invention. FIG. 10 is a set of photographs showing Example 1 in a case where the shaping temperature is 200 [°C] in the first embodiment of the present invention. FIG. 11 is a set of photographs showing side views of Example 1 in a case where the shaping temperature is 200 [°C] in the first embodiment of the present invention. FIG. 12 is a graph showing a relation between shaping temperature and spring-back of Example 2 in the first embodiment of the present invention. FIG. 13 is a set of photographs showing Example 2 in a case where the shaping temperature is normal in the first embodiment of the present invention. FIG. 14 is a set of photographs showing Example 2 in a case where the shaping temperature is 200 [°C] in the first embodiment of the present invention. FIG. 15 is a set of photographs showing side views of Example 2 in a case where the shaping temperature is 200 [°C] in the first embodiment of the present invention. In FIG. 8, (a) shows cases where metal plates are used and (b) shows cases where metal plates are omitted. In FIG. 9, (a), (b), and (c) show cases where cutting directions are 0 degree, 90 degrees, and 45 degrees. In FIG. 11, (a) and (b) show cases where cutting directions are 0 degree and 90 degrees. In FIG. 13, (a) shows cases where metal plates are used and (b) shows cases where metal plates are omitted. In FIG. 15, (a) and (b) show cases where cutting directions are 0 degree and 45 degrees.

Examples 1 and 2 are cases wherein the so-called CFRP, which comprises carbon fibers and epoxy, thermoset resin, as matrix, has been employed as the fiber reinforced composite panel 21, specifically, a commercial product called as pre-preg has been employed. The pre-preg is a product of description in the following Table 2, and is sold by Toray Industries, Inc. by the brand name of "TORAYCAprepreg", and the product number "3252S-10".

[Table 2]

|  | Example 1 | Example 2 |
|---|---|---|
| Pre-preg | Toray Industries, Inc. 3252S-10 (t=0.1[mm] · One fiber direction) | |
| Resin | 2592 (Epoxy · Taugh up resin) | |
| Cure temperature | 130[°C] | |

(continued)

|  | Example 1 | Example 2 |
|---|---|---|
| Carbon fiber | T700SC (Tensile strength:4.9[GPa]) | |
| Fiber Content | 67 [%] | |
| Number of laminations | 3 | 4 |
| Laminating direction | 0/0/0 | 0/90/90/0 |
| Cutting direction | 0deg. · 45deg. · 90deg. | |
| Heat capacity[J/K] | 0.091 | 0.23 |

As shown in Table 2, the resin is epoxy resin of product number "2592", and the cure temperature is 130 [°C]. The fiber is carbon fiber of product number "T700SC", and the fiber content in pre-preg is 67 [%]. Each sheet of the pre-pregs is a sheet of carbon fiber arranged in one direction and containing resin. Although thickness t of a sheet of the pre-pregs is t= 0.1 [mm], each fiber reinforced composite panel 21 of Example 1 has laminated three pre-pregs, and each fiber reinforced composite panel 21 of Example 2 has laminated four pre-pregs. In the laminating direction, the carbon fiber arrangement direction of a pre-preg as a standard in lamination is indicated as 0, and the carbon fiber arrangement direction perpendicular thereto is indicated as 90. The cutting direction includes three types of angles, such as 0 degree, 45 degrees, and 90 degrees, and the relation between the cutting direction and the carbon fiber arrangement direction in the fiber reinforced composite panel 21 is shown in the following Table 3.

## [Table 3]

The heat capacity shown in Table 2 is the value computed through multiplying the specific heat of fiber and resin by their sum of weight in a sheet of the fiber reinforced composite panel 21. Although both of the fiber reinforced composite panels 21 of Examples 1 and 2 are rectangle sheets of 30 [mm] in length and 10 [mm] in width, their thicknesses are different according to the number of laminated sheets of pre-pregs.
The results of shaping the fiber reinforced composite panels 21 of Example 1 according to the specific example are shown in FIG. 7. In FIG. 7, a horizontal axis indicates bending temperature [°C], and a vertical axis indicates spring-back of end product, or the difference $\theta$ between the measured bend angle of the fiber reinforced composite panel 21 and the angle (90 degrees) of the face of the upper metallic die 12. ○ shows the fiber reinforced composite panels 21 of 0 degree cutting direction, Δ shows the fiber reinforced composite panels 21 of 45 degrees cutting direction, and □ shows the fiber reinforced composite panels 21 of 90 degrees cutting direction. In any case, the metal plates 22 used are cold-rolled steel plates stipulated in JISG3141 of a size of 30 [mm] in length, 10 [mm] in width, and 1 [mm] in thickness.
It can be said that the fiber reinforced composite panels 21 of Example 1 are low in strength and high in anisotropy, since the number of laminations of pre-preg is small as three and the laminating direction of all the pre-preg is 0. The result shown in FIG. 7 illustrates that quantities of spring-back are large in cases where the bending temperature is the normal temperature (or room temperature) or between about 20 [°C] and 50 [°C], since the bending is performed at low temperature or so-called the cold-bending is performed, but that quantities of spring-back are as small as about 10 degrees and qualities of shaping are high in cases where the bending temperatures are 200 [°C] and 250 [°C]. And it also illustrates that quantities of spring-back are small and qualities of shaping are high in cases 0 degree cutting direction, since the carbon fiber arrangement direction and the bending direction are the same as shown in Table 3.
FIG. 8(a) shows samples of the fiber reinforced composite panels 21 of Example 1, which were shaped at the normal temperature (or room temperature) according to the specific example. The cutting directions of the samples in FIG. 8(a) are 0 degree, 90 degrees, and 45 degrees, in order from the left. FIG. 8(b) shows samples of the fiber reinforced composite panels 21, which were shaped without the metal plates 22 attached their both sides, for comparison. Also, the cutting directions of the samples in FIG. 8(b) are 0 degree, 90 degrees, and 45 degrees, in order from the left. FIG. 9 shows side views of samples of the fiber reinforced composite panels 21 of Example 1, which were shaped at the normal temperature (or room temperature) according to the specific example. The cutting directions of samples shown in FIGS. 9(a), 9(b), and 9(c) are 0 degree, 90 degrees, and 45 degrees, respectively.

Samples shown in FIGS. 8(a) and 9(a)-(c) illustrate that, even in cases of shaping at the normal temperature (or room temperature), the fiber reinforced composite panels 21 bear neither partial fracture nor local irregular modification, such as necking. Therefore, it can be said that, when the fiber reinforced composite panels 21 are shaped with the metal plates 22 attached their both sides, even at the normal temperature (or room temperature), the fiber reinforced composite panels 21 of good quality as end products can be obtained.

When any fracture or necking occur in a part of the fiber reinforced composite panel 21 during shaping process, the part would be extended more than other part. It is estimated that the existence of the metal plates 22 attached both sides of the fiber reinforced composite panel 21 causes additional tensile and compression stress inside the fiber reinforced composite panel 21 and the metal plates 22 to prevent extension of the part.

FIG. 10 shows samples of the fiber reinforced composite panels 21 of Example 1, which were shaped at 200 [°C] according to the specific example. The cutting directions of the samples shown in FIG. 10 are 0 degree, 90 degrees, and 45 degrees, in order from the left. Comparison of samples shown in FIG. 10 with those shown in FIG. 8(a) illustrates that raising shaping temperature up to 200 [°C] brings less quantities of spring-back and higher qualities of shaping.

FIG. 11 shows side views of samples of the fiber reinforced composite panels 21 of Example 1, which were shaped at 200 [°C] according to the specific example. The cutting directions of samples shown in FIGS. 11(a) and (b), are 0 degree and 90 degrees, respectively. FIG. 11(a-1) is a set of enlarged photographs of the sample shown in FIG. 11(a), and FIGS. 11(b-1) and (b-2) are enlarged photographs of the sample shown in FIG. 11(b). FIG. 11 illustrates that the sample of 90 degrees cutting direction is good in quality of shaping but bears a little of separation and defect of carbon fiber in its bending part, and that the sample of 0 degree cutting direction is very good in quality of shaping without bearing any separation or any defect of carbon fiber in its bending part.

The results of shaping the fiber reinforced composite panels 21 of Example 2 according to the specific example are shown in FIG. 12. In FIG. 12, as well as in FIG. 7, a horizontal axis indicates bending temperature[°C], and a vertical axis indicates spring-back of end product, or the difference $\theta$ between the measured bend angle of the fiber reinforced composite panel 21 and the angle (90 degrees) of the face of the upper metallic die 12. ○ shows the fiber reinforced composite panels 21 of 0 degree cutting direction, △ shows the fiber reinforced composite panels 21 of 45 degrees cutting direction, and □ shows the fiber reinforced composite panels 21 of 90 degrees cutting direction. In any case, the metal plates 22 employed are cold-rolled steel plates stipulated in JISG3141 of a size of 30 [mm] in length, 10 [mm] in width, and 1 [mm] in thickness.

Further, ◇ shows the fiber reinforced composite panels 21 of 90 degrees cutting direction, with the metal plates 22 of the super duralumin called as A2024 in JIS of a size of 30 [mm] in length, 10 [mm] in width, and 1 [mm] in thickness.

It can be said that the fiber reinforced composite panels 21 of Example 2 are high in strength and low in anisotropy, since the number of laminations of pre-pregs is small as four and the laminating directions of the pre-pregs are cross each other as 0 and 90. The result shown in FIG. 12 illustrates that quantities of spring-back are large in cases where the bending temperature is the normal temperature (or room temperature) or between about 20 [°C] and 50 [°C], since the bending is performed at low temperature or so-called cold-bending is performed, but that quantities of spring-back becomes small as the bending temperature arises. It illustrate that quantities of spring-back is about 10 degrees and qualities of shaping are high in cases where the bending temperatures are 200 [°C]. And it also illustrates that, in cases where the metal plates 22 of super duralumin are employed, the spring-back of the metal plates 22 in itself is reflected as that of the fiber reinforced composite panels 21.

FIG. 13(a) shows samples (the metal plates 22 used therein are cold-rolled steel plates) of the fiber reinforced composite panels 21 of Example 2, which were shaped at the normal temperature (or room temperature) according to the specific example. FIG. 13(a-1) is a set of back views of the sample shown in FIG. 13(a). The cutting directions of the samples in FIGS. 13(a) and (a-1) are 0 degree, 90 degrees, and 45 degrees, in order from the left. FIG. 13(b) shows samples of the fiber reinforced composite panels 21, which were shaped without the metal plates 22 attached their both sides, for comparison. FIG. 13(b-1) is a set of back views of the sample shown in FIG. 13(b). Also, the cutting directions of the samples in FIG. 13(b) are 0 degree, 90 degrees, and 45 degrees, in order from the left.

Samples shown in FIGS. 13(a) and (a-1) illustrate that, even in cases of shaping at the normal temperature (or room temperature), the fiber reinforced composite panels 21 bear neither partial fracture nor local irregular modification, such as necking. Therefore, it can be said that, when the fiber reinforced composite panels 21 are shaped with the metal plates 22 attached their both sides, even at the normal temperature (or room temperature), the fiber reinforced composite panels 21 of good quality as end products are obtained.

FIG. 14 shows samples of the fiber reinforced composite panels 21 of Example 2, which were shaped at 200 [°C] according to the specific example. The cutting directions of the samples in FIG. 14 are 0 degree, 90 degrees, and 45 degrees, in order from the left. Comparison of samples shown in FIG. 14 with those shown in FIG. 13(a) illustrates that raising shaping temperature up to 200 [°C] brings less quantities of spring-back and higher qualities of shaping.

FIG. 15 shows side views of samples of the fiber reinforced composite panels 21 of Example 2, which were shaped at 200 [°C] according to the specific example. The cutting directions of samples shown in FIGS. 15(a) and (b) are 0 degree and 45 degrees, respectively. FIGS. 15(a-1) and (a-2) are enlarged photographs of the sample shown in FIG. 15(a), and FIGS. 15(b-1) and (b-2) are enlarged photographs of the sample shown in FIG. 15(b). FIG. 15 illustrates that the sample of 45 degrees cutting direction is good in quality of shaping but bears a little of defect of carbon fiber in its bending part, and that the sample of 0 degree cutting direction is very good in quality of shaping with bearing a little of separation but no defect of carbon fiber in its bending part.

Next will be described Examples 3 and 4.

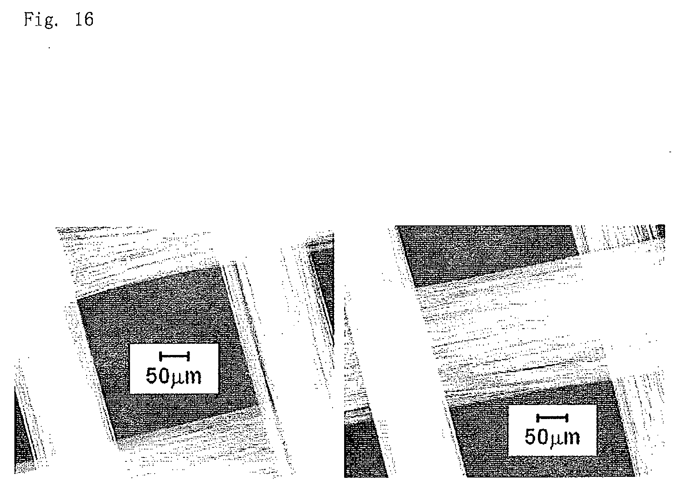

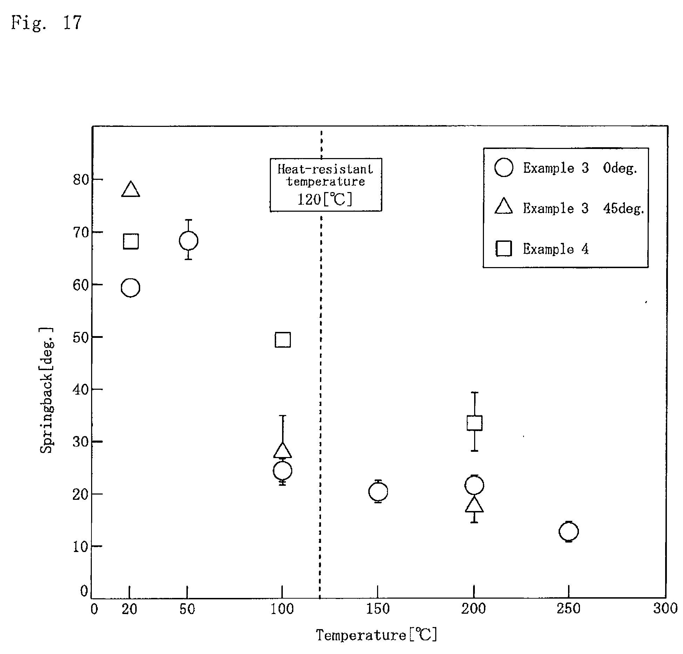

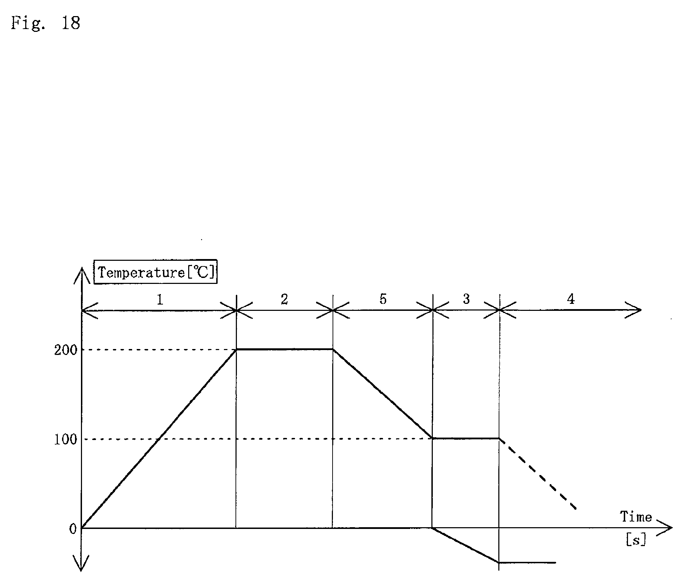

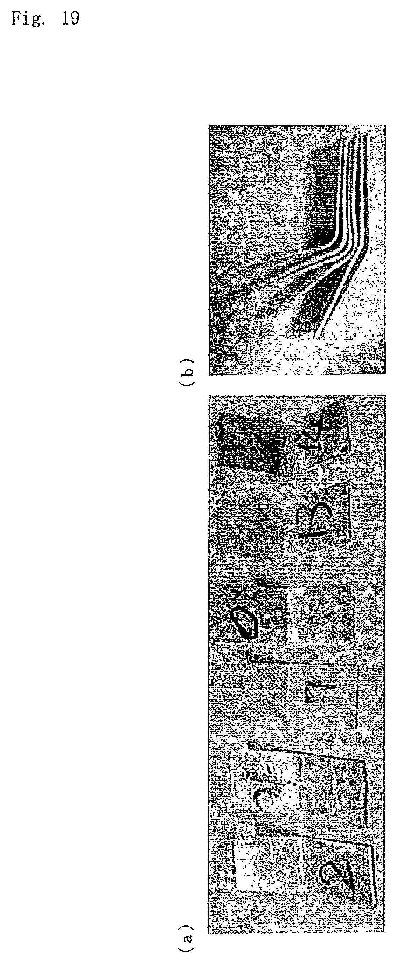

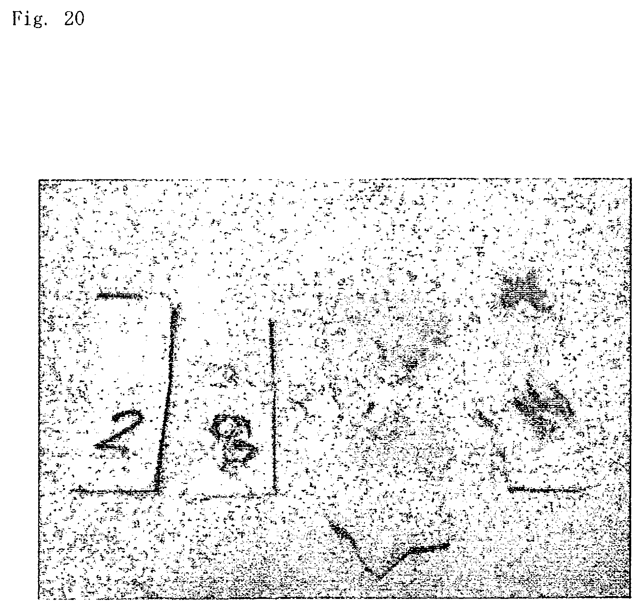

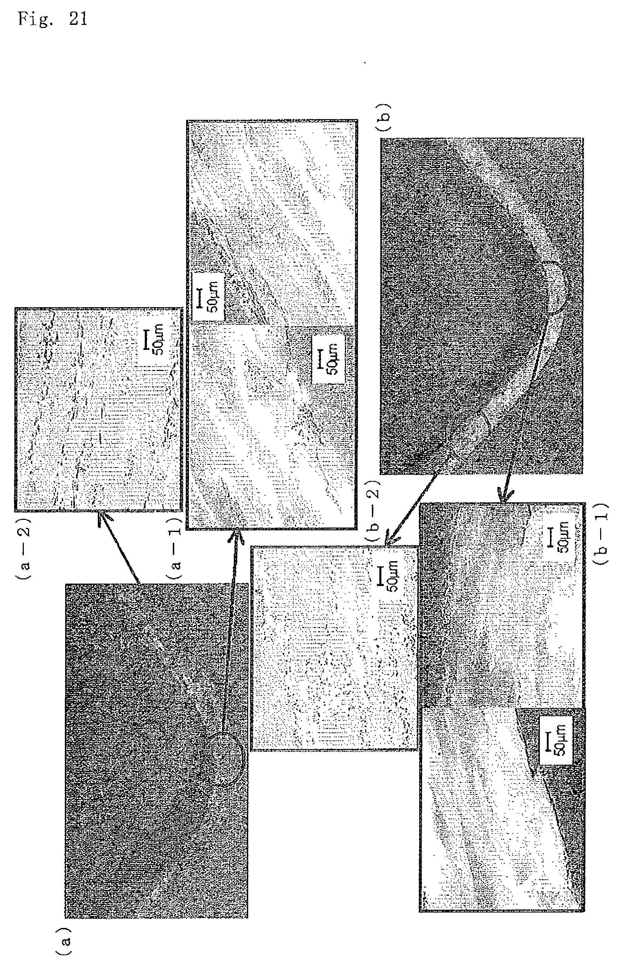

FIG. 16 is a set of enlarged photographs showing cloth used for shaping Example 3 in the first embodiment of the present invention. FIG. 17 is a graph showing a relation between shaping temperature and spring-back of Examples 3 and 4 in the first embodiment of the present invention. FIG. 18 is a graph showing changes of temperature and the metallic dies stroke in a case of shaping Example 4 at shaping temperature of 200 [°C] in the first embodiment of the present invention. FIG. 19 is a set of photographs showing Example 3 in the first embodiment of the present invention. FIG. 20 is a photograph showing Example 4 in the first embodiment of the present invention. FIG. 21 is a set of photographs showing side views of Example 3 in the first embodiment of the present invention. In FIG. 19, (a) is a photograph showing front views, and (b) is a photograph showing side views. In FIG. 21, (a) and (b) show cases where cutting directions are 0 degree and 45 degrees.

Example 3 is a case wherein the so-called GFRP, which comprises glass fibers and unsaturated polyester resin, thermoset resin, as matrix, has been employed as the fiber reinforced composite panel 21, specifically, the fiber reinforced composite panel 21 made by the present inventors according to the processes shown in FIGS. 3(a)-(c) has been employed. The fiber reinforced composite panel 21 is a product of description in the following Table 4, and has been made, by the present inventors, of the cloth 25, which is a glass fiber cloth made of plain woven glass fibers and is sold by EPOCH CORPORATION by the brand name of "micro cloth", and of the matrix, which is unsaturated polyester resin sold by KANKI KAKOUZAI Company, Ltd.

[Table 4]

|  | Example 3 |
| --- | --- |
| Resin | Unsaturated polyester (Styrene 40-50[%] · KANKI KAKOUZAI) |
| Melting point | About 120[°C] |
| Glass fiber cloth | Micro cloth (t=0. 03[mm] · Plain weave · EPOCH) |
| Fiber Content | 47[%] |
| Number of laminations | 10 |
| Laminating direction | Only 0 |
| Cutting direction | Odeg. · 45deg. |
| Heat capacity[J/K] | 0.31 |

As shown in Table 4, the resin is unsaturated polyester resin generally used for production of FRP containing styrene 40-50 [%], and has a melting point or heat-resistant temperature of epoxy resin of about 120 [°C]. The fiber is glass fiber, and the fiber content in the fiber reinforced composite panel 21 is 47 [%]. Although thickness t of a sheet of glass fiber cloth or the cloth 25 is t= 0.03 [mm], each fiber reinforced composite panel 21 has ten sheets of the glass fiber cloth which are laminated in the same direction and are impregnated with resin mixed with cure agent. Therefore, the laminating direction is only 0. The cutting direction includes two types of angles, such as 0 degree and 45 degrees, and the relation between the cutting direction and the glass fiber arrangement direction in the fiber reinforced composite panel 21 is shown in the following Table 5.

[Table 5]

| Cutting direction | 0deg. | 45deg. |
|---|---|---|
| Example 3 | | |

(Bending direction)

The heat capacity shown in Table 5 is the value computed through multiplying the specific heat of fiber and resin by their sum of weight in a sheet of the fiber reinforced composite panel 21. Notably, the fiber reinforced composite panels 21 of Example 3 are rectangular plates of 30 [mm] in length and 10 [mm] in width.

Example 4 is a case wherein the so-called GFRP, which comprises glass fibers and polypropylene resin, thermoset resin, as matrix, has been employed as the fiber reinforced composite panel 21, specifically, a commercial product called as stampable sheet has been employed. The stampable sheet is a product of description in the following Table 6, and is sold by Toyobo Co., Ltd. by the brand name "QF (quick form)-random sheet."

[Table 6]

| | Example 4 |
|---|---|
| Product name·Components | Toyobo QF sheet Polypropylene+Glass fiber(random) |
| Resin melting point | About 180[°C] |
| Fiber content | 50[%] |
| Heat capacity[J/K] | 0.45 |

As shown in Table 6, the resin is polypropylene and has a melting point or heat-resistant temperature of about 180 [°C]. The fiber is glass fiber, and dispersed uniformly and randomly, without getting entangled, in the resin. The fiber content in the stampable sheet is 50 [%]. One sheet of the stampable sheet, thickness t of which is t= 0.8 [mm], is used, in a non-laminated state, for composing the fiber reinforced composite panel 21. The heat capacity shown in Table 6 is the value computed through multiplying the specific heat of fiber and resin by their sum of weight in a sheet of the fiber reinforced composite panel 21.

The results of shaping the fiber reinforced composite panels 21 of Examples 3 and 4 according to the specific example are shown in FIG. 17. In FIG. 17, as well as FIG. 7, a horizontal axis indicates bending temperature[°C], and a vertical axis indicates spring-back of end product, or the difference $\theta$ between the measured bend angle of the fiber reinforced composite panel 21 and the angle (90 degrees) of the face of the upper metallic die 12. ○ shows the fiber reinforced composite panels 21 of 0 degree cutting direction of Example 3, Δ shows the fiber reinforced composite panels 21 of 45 degrees cutting direction of Example 3, and □ shows the fiber reinforced composite panels 21 of Example 4. In any case, the metal plates 22 employed are cold-rolled steel plates stipulated in JISG3141 of a size of 30 [mm] in length, 10 [mm] in width, and 1 [mm] in thickness.

The result shown in FIG. 17 illustrates that, in Example 3, quantities of spring-back are large in cases where the bending temperature is the normal temperature (or room temperature) or between about 20 [°C] and 50 [°C], since the bending is performed at low temperature or so-called cold-bending is performed, but that quantities of spring-back are small and qualities of shaping are high in cases where the bending temperatures are 100 [°C] or more. Though, quantities of spring-back are as a little large as about 20 degrees in cases where the bending temperatures are 200 [°C]. And it also illustrates that, in Example 3, the anisotropy becomes low as the bending temperature becomes high.

It illustrates that, in Example 4, the higher the bending temperature becomes, the lower the quantity of spring-back becomes at a constant pace.

Notably, the stampable sheets employed in Example 4 are broken when the bending is performed at 200 [°C] or more. Therefore, when the bending is performed at 200 [°C] in Example 4, the thermo-control as shown in FIG. 18 has been performed. Specifically, during the period 1, the temperature has been risen by heating at a rate of 50 [°C/s] from the normal temperature (or room temperature) to 200 [°C], and, during the period 2, it has been maintained at 200 [°C]. Then, during the period 5 established between the periods 2 and 3, it has been lowered by self-cooling from 200 [°C] to 100 [°C]. Then, during the period 3, it has been maintained at 100 [°C]. Other points in the thermo-control and the stroke-control are similar to those in FIG. 6.

FIG. 19 shows samples of the fiber reinforced composite panels 21 of Example 3, which were shaped according to the specific example. FIG. 19(a) is a set of front views of the samples and their bending temperatures are the normal temperature (or room temperature), 50 [°C], 100 [°C], 150 [°C], 200 [°C], and 250 [°C] in order from the left. FIG. 19(b) shows side views of the samples. FIG. 19 illustrates that the higher the bending temperature becomes, the lower the quantity of spring-back becomes.

FIG. 20 shows samples of the fiber reinforced composite panels 21 of Example 4, which were shaped according to the specific example. FIG. 20 is a set of the samples and their bending temperatures are the normal temperature (or room temperature), 100 [°C], 200 [°C], and 200 [°C] in order from the left. The sample third from the left is a result of bending according to the thermo-control and the stroke-control similar to those in FIG. 6, without establishing the period 5 during which the temperature is lowered from 200 [°C] to 100 [°C]. On the other hand, the sample fourth from the left, or the right utmost, is a result of bending according to the thermo-control shown in FIG. 18, with establishing the period 5 during which the temperature is lowered from 200 [°C] to 100 [°C]. These illustrate that the fiber reinforced composite panels 21 of Example 4 are broken when the bending is performed at 200 [°C] or more.

FIG. 21 shows side views of samples of the fiber reinforced composite panels 21 of Example 3, which were shaped at 200 [°C] according to the specific example. The cutting directions of samples shown in FIGS. 21(a) and (b) are 0 degree and 45 degrees, respectively. FIGS. 21(a-1) and (a-2) are enlarged photographs of the sample shown in FIG. 21(a), and FIGS. 21(b-1) and (b-2) are enlarged photographs of the sample shown in FIG. 21(b). FIG. 21 illustrates that the sample of 45 degrees cutting direction is good in quality of shaping but bears a little of separation, and that the sample of 0 degree cutting direction is very good in quality of shaping with bearing a little of irregularity of fiber.

Although, in the present embodiment, described are only the examples of bending the fiber reinforced composite panel 21 into a member of a V-shape, a U-shape or a hat-shape cross section through a shaping process, according to the shaping method of the present invention, it is possible to bend the fiber reinforced composite panel 21 into a member of a variety of cross sectional shapes, such as a wave-like shape, by varying faces of metallic dies.

As described above, in the present embodiment, the fiber reinforced composite panel 21 is sandwiched between the pair of metallic dies and is bent in a state where each of its both faces is in contact with a metal plate 22, and the metal plates 22 are detached from the sides of the fiber reinforced composite panel 21 after shaping.

Thereby, appearance of fracture and local irregular deformation, such as necking, in portions of the fiber reinforced composite panel 21 derived from shaping can be surely prevented. Therefore, the fiber reinforced composite panel 21 can be deformed easily, quickly, at low-cost and stably. Accordingly, good quality products in a variety of shapes can be produced less-expensively and in great quantity.

Also, the fiber reinforced composite panel 21 is heated indirectly by heating the metal plate 22. In this case, quantity of spring-back is small and quality of shaping is high, comparing with the case where the fiber reinforced composite panel 21 is shaped at the normal temperature (or room temperature).

Further, the metal plate 22 is heated by the induction heating. Thereby, the metal plate 22 is heated uniformly and quality of shaping is high.

Further, after heating the fiber reinforced composite panel 21 to the predetermined temperature, the metallic dies are worked to clamp the fiber reinforced composite panel 21, and the fiber reinforced composite panel 21 is cooled with being clamped. Thereby, the fiber reinforced composite panel 21 is cooled down with its both sides contacting the metallic dies via the metal plate 22, so that the heat is taken from it by the metallic dies and it is cooled down effectively.

Further, after being heated to the predetermined temperature, the fiber reinforced composite panel 21 is heated to maintain the predetermined temperature until an initial stage of being clamped. Thereby, the temperature of fiber reinforced composite panel 21 is maintainable even if heat is taken by the metallic dies so that excessive temperature lowering is prevented and quality of shaping can be kept.

Further, the fiber reinforced composite panel 21 is a plate, which is made by impregnating fibers as reinforcing material with a resin as matrix. In this case, the resin may be thermoplastic resin, such as polyethylene, polypropylene, nylon and polystyrene, thermosetting resin, such as epoxy, phenol, melamine and unsaturated polyester, or any kind of resin. The fiber may also be carbon fiber, glass fiber, or any kind of fiber.

Next, a second embodiment of the present invention will be described. Structural features similar to the first embodiment are denoted by common reference materials, and repeated description of operation and effects similar to those of the first embodiment is omitted.

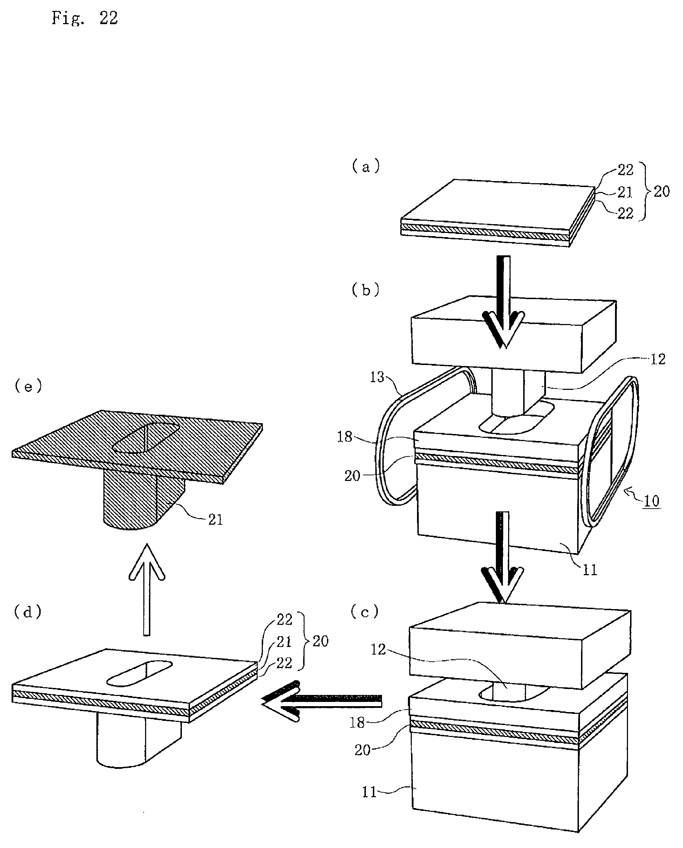

FIG. 22 is a set of schematic views showing the shaping method of fiber reinforced composite panel in a second embodiment of the present invention. In FIG. 22, (a) shows a material panel before being shaped, (b) shows a shaping apparatus before working, (c) shows the shaping apparatus after working, (d) shows the material panel after being shaped, and (e) shows a fiber reinforced composite panel after being shaped.

In the first embodiment, described is a shaping to bend the fiber reinforced composite panel 21 into a V-sectional-shape, a U-sectional-shape or a hat-sectional-shape, in the present embodiment will be described a shaping to draw the fiber reinforced composite panel 21 into a vessel-like shape or a shape of cylinder with a bottom plate, by protruding or depressing a part of it.

A shaping apparatus 10 according to the present embodiment has a lower metallic die 11 which serves as a fixed die and an upper metallic die 12 which serves as a moving die or a punch, and, in addition, an auxiliary die 18 which serves as a blank holder for pressing wrinkles. The lower metallic die 11 is a female die with a face having a cylindrical concave with an ellipse-like cross section, and the upper metallic die 12 is a male die with a face having a pillar like convex with an ellipse-like cross section.

In shaping the material panels 20, as shown in FIG. 22(b), the material panels 20 is placed at first on the face of the lower metallic die 11, so that the center of the material panels 20 is placed over the concave of the lower metallic die 11 and the peripheral part of the material panels 20 is sandwiched between the lower metallic die 11 and the auxiliary die 18. Then, electric power is supplied to the induction heating coils 13 to induction heat the metal plates 22, so that the fiber reinforced composite panel 21 is heated indirectly.

Then, the actuator (not shown) of the shaping apparatus 10 is operated to displace the upper metallic die 12 downwardly and to insert it into the concave of the lower metallic die 11, as shown in FIG. 22(c). Thereby, the center part the material panel 20 is pushed into the concave of the lower metallic die 11 by the upper metallic die 12, so that the material panel 20 is drawn into a shape shown in FIG. 22(d).

Then, the material panel 20 is cooled down while the clamping is continued. When the material panel 20 is cooled down to the normal temperature (or room temperature), the actuator (not shown) of the shaping apparatus 10 is operated so as to displace the upper metallic die 12 upwardly, so that a gap between the upper metallic die 12 and the lower metallic die 11 becomes wide and open, and, also, a gap between the auxiliary die 18 and the lower metallic die 11 becomes wide and open, then the material panel 20 is brought out from the gap between the auxiliary die 18 and the lower metallic die 11.

Thereby, the material panel 20, which is shaped according to the faces of the upper metallic die 12 and the lower metallic die 11, can be obtained, as shown in FIG. 22(d). Then, after the metal plates 22 are removed from both its upper and lower sides, the fiber reinforced composite panel 21 in a desired shape as an end product can be obtained, as shown in FIG. 22(e).

Other points in structures of the shaping apparatus 10 and the material panel 20 and other points in shaping conditions and operations in the method of shaping are similar to those explained in the first embodiment, therefore description about them is omitted.

Next will be described a specific example according to the present embodiment.

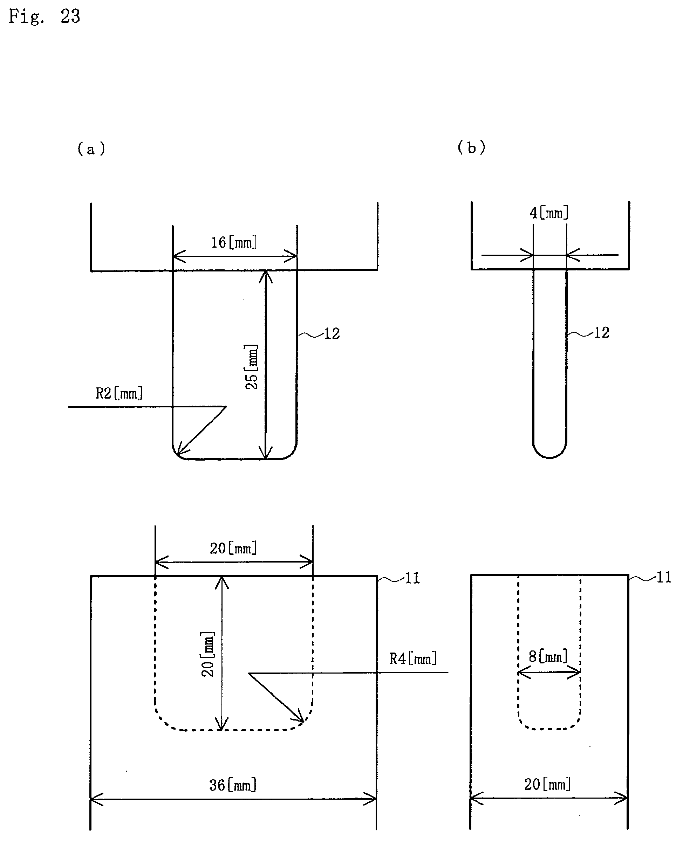

FIG. 23 is a set of views showing a specific example of metallic dies employed for the shaping method of fiber reinforced composite panel in the second embodiment of the present invention. In FIG. 23, (a) shows a side view, and (b) shows a front view.

The present inventors have really processed shaping of the material panel 20 employing the metallic dies as shown in FIG. 23. The face of the lower metallic die 11 has a cylindrical concave of 20 [mm] depth, which has an ellipse-like cross section with a length of 20 [mm] and a width of 8 [mm], and has round shape bottom corners of 4 [mm] radius. The upper metallic die 12 is a pillar like convex of 25 [mm] height, which has an ellipse-like cross section with a length of 6 [mm] and a width of 4 [mm], and has round shape top corners of 2 [mm] radius.

The material panel 20 is a square plate of 30 [mm] in length and 30 [mm] in width. Its thickness varies according to a thickness of the fiber reinforced composite panel 21. The material panel 20 is placed on the face of the lower metallic die 11 in such a position as its width direction corresponds to the width direction of the upper metallic die 12 and the lower metallic die 11, so that the material panel 20 is sandwiched between the lower metallic die 11 and the auxiliary die 18 to be processed.

Each of the metal plates 22 attached onto both top and bottom sides of the fiber reinforced composite panel 21 is a square plate of 30 [mm] in length, 30 [mm] in width, and 0.3 [mm] or 1.0 [mm] in thickness. It is specifically a steel plate, which is made of mild steel, called as SPCC, and is a cold-rolled steel plate stipulated in JISG3141, as described in the first embodiment.

The fiber reinforced composite panel 21 is a rectangular plate of 30 [mm] in length and 30 [mm] in width, and its thickness varies depending on its variety, as later mentioned.

The actual place where the temperature of fiber reinforced composite panel 21 is detected by the thermal detector 16, or a thermo-control point 16a is around the center of length in the lower metal plate 22.

A shaping temperature is specifically a set of temperatures of two kinds, such as the normal temperature (or room temperature) and 100 [°C].

Then, indirect heating of the fiber reinforced composite panel 21 has been performed through placing the material panel 20 on the face of lower metallic die 11 of the shaping apparatus 10, through sandwiching it between the lower metallic die 11 and the auxiliary die 18, and through supplying electric power to the induction heating coils 13 so as to induction heat its metal plates 22. Specifications of thermo-control are similar to those explained in the first embodiment, therefore description about them is omitted. When the shaping temperature is the normal temperature, indirect heating of the fiber reinforced composite panel 21 is omitted, and any thermo-control is not performed.

Next will be described the fiber reinforced composite panels 21 actually shaped according to the specific example. Examples 5 and 6 will be described first.

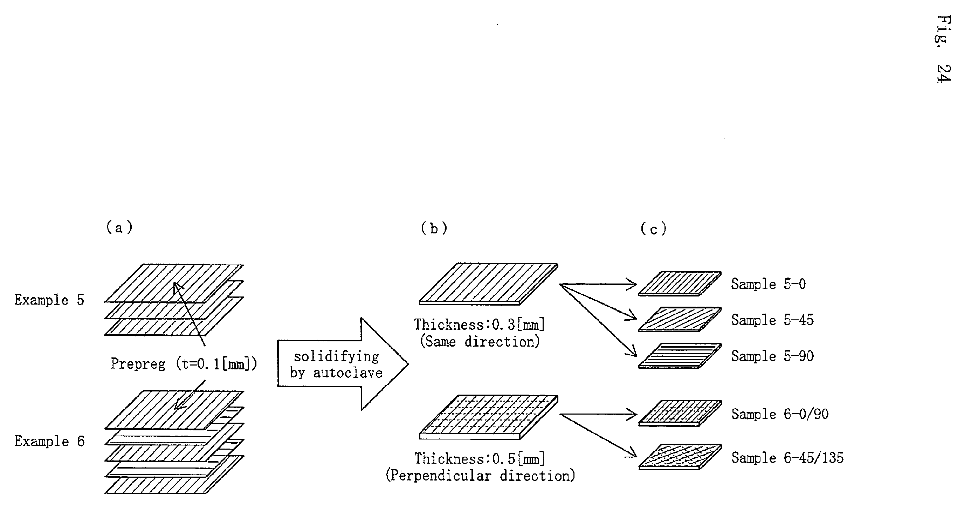

FIG. 24 is a set of views illustrating Examples 5 and 6 in the second embodiment of the present invention. FIG.

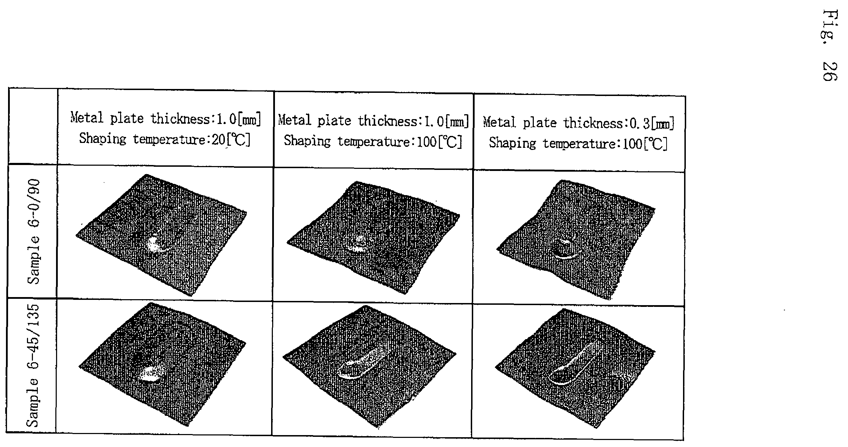

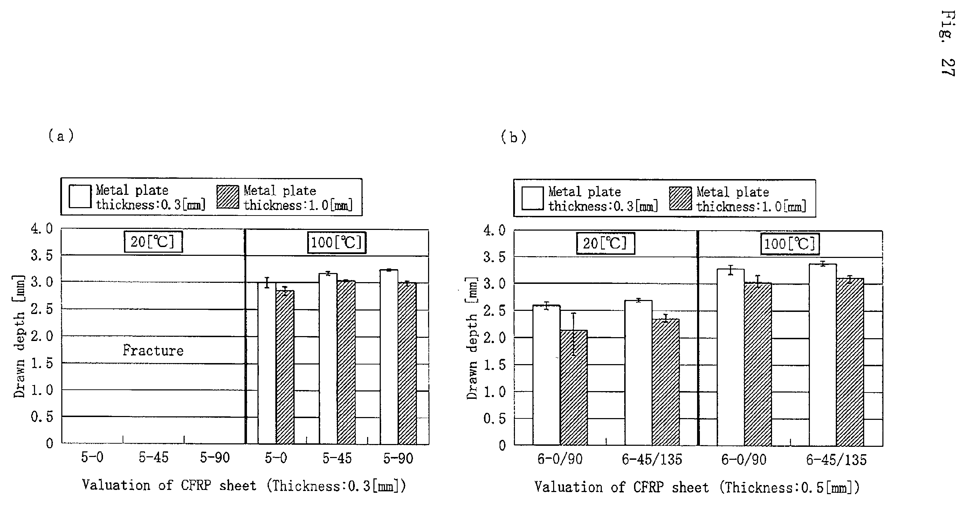

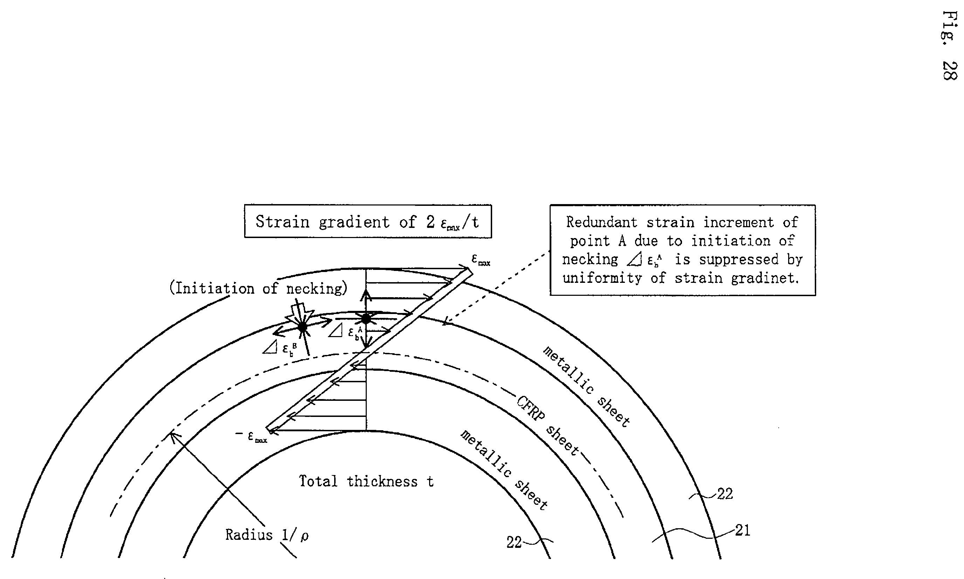

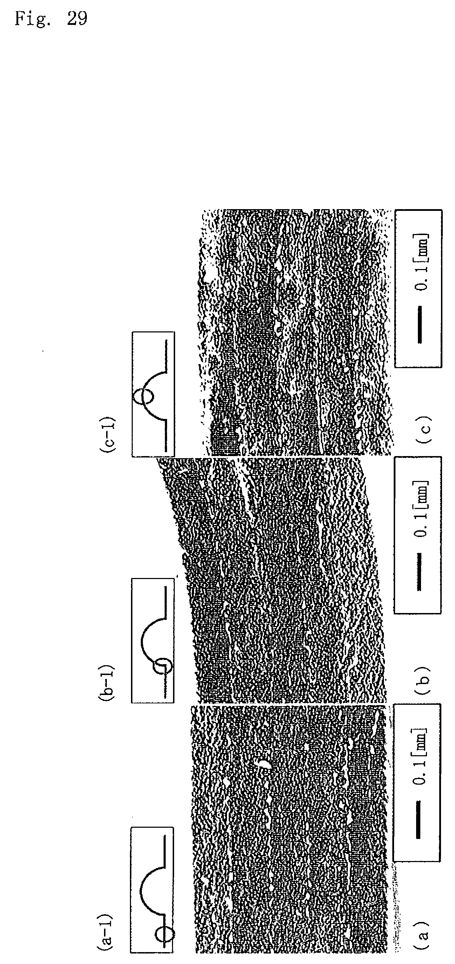

25 is a set of photographs showing Example 5 in the second embodiment of the present invention. FIG. 26 is a set of photographs showing Example 6 in the second embodiment of the present invention. FIG. 27 is a set of graphs showing relations between shaping temperature and drawing stroke of Examples 5 and 6 in the second embodiment of the present invention. FIG. 28 is a view illustrating mechanisms for achieving good formability in the second embodiment of the present invention. FIG. 29 is a set of photographs showing sectional views of Example 6 in the second embodiment of the present invention. In FIG. 24, (a) shows laminating directions of pre-pregs, (b) shows laminated and solidified pre-pregs, and (c) shows cutting directions of pre-pregs. In FIG. 27, (a) shows relations between shaping temperature and drawn depth of Example 5, and (b) shows relations between shaping temperature and drawn depth of Example 6. In FIG. 29, (a) is a photograph showing a cross section of a plane part around a convex part, (b) is a photograph showing a cross section of a boundary part between a plane part and a convex part periphery, and (c) is a photograph showing a cross section of a top of convex part.

Examples 5 and 6, as well as Examples 1 and 2 in the first embodiment, are cases wherein the so-called CFRP, which comprises carbon fibers and epoxy, thermoset resin, as matrix, has been employed as the fiber reinforced composite panel 21, specifically, a commercial product called as pre-preg has been employed. The pre-preg is a product of description in the following Table 7, as well as Examples 1 and 2, and is sold by Toray Industries, Inc. by the brand name of "TORAYCAprepreg", and the product number "3252S-10".

[Table 7]

|  | Example 5 | Example 6 |
|---|---|---|
| Pre-preg | Toray Industries. Inc. 3252S-10 (t=0. 1[mm] · One fiber direction) | |
| Resin | 2592 (Epoxy · Taugh up resin) | |
| Cure temperature | 130 [°C] | |
| Carbon fiber | T700SC (Tensile strength:4.9[GPa]) | |
| Fiber Content | 67[%] | |
| Number of laminations | 3 | 5 |
| Laminating direction | 0/0/0 | 0/90/0/90/0 |
| Cutting direction | 0deg. · 45deg. · 90deg. | |
| Heat capacity[J/K] | 0.091 | 0.3 |

The heat capacity shown in Table 7 is the value computed through multiplying the specific heat of fiber and resin by their sum of weight in a sheet of the fiber reinforced composite panel 21. Although both of the fiber reinforced composite panels 21 of Examples 5 and 6 are square sheets of 30 [mm] in length and 30 [mm] in width, their thicknesses are different according to the number of laminated sheets of pre-preg. As shown in FIG. 24(a), the fiber reinforced composite panel 21 of Example 5 has laminated three pre-pregs, and the fiber reinforced composite panel 21 of Example 6 has laminated five pre-pregs. Then, as shown in FIG. 24(b), the thickness of the fiber reinforced composite panel 21 of Example 5 is 0.3 [mm], and the thickness of the fiber reinforced composite panel 21 of Example 6 is 0.5 [mm].

In the laminating direction, the carbon fiber arrangement direction of a pre-preg as a standard in lamination is indicated as 0, and the carbon fiber arrangement direction perpendicular thereto is indicated as 90. As shown in FIG. 24(a), the fiber reinforced composite panel 21 of Example 5 has pre-pregs laminated so that all the carbon fiber arrangement direction is the same, and the fiber reinforced composite panel 21 of Example 6 has pre-pregs laminated so that the carbon fiber arrangement directions alternate orthogonally.

The cutting direction includes three types of angles, such as 0 degree, 45 degrees, and 90 degrees, and the relation between the cutting direction and the carbon fiber arrangement direction in the fiber reinforced composite panel 21 is shown in FIG. 24(c). In the present embodiment, each of samples will be called as Sample 5-0, Sample 5-45, Sample 5-90, Sample 6-0/90 or Sample 6-45/135, when necessary, based on the relation between the cutting direction and the carbon fiber arrangement direction in the fiber reinforced composite panel 21 of it.

The fiber reinforced composite panel 21 is placed on the face of the lower metallic die 11 to be processed in such a position as its lateral direction in FIG. 24(c) corresponds to the width direction (the lateral direction in FIG. 23(b)) of the upper metallic die 12 and the lower metallic die 11.

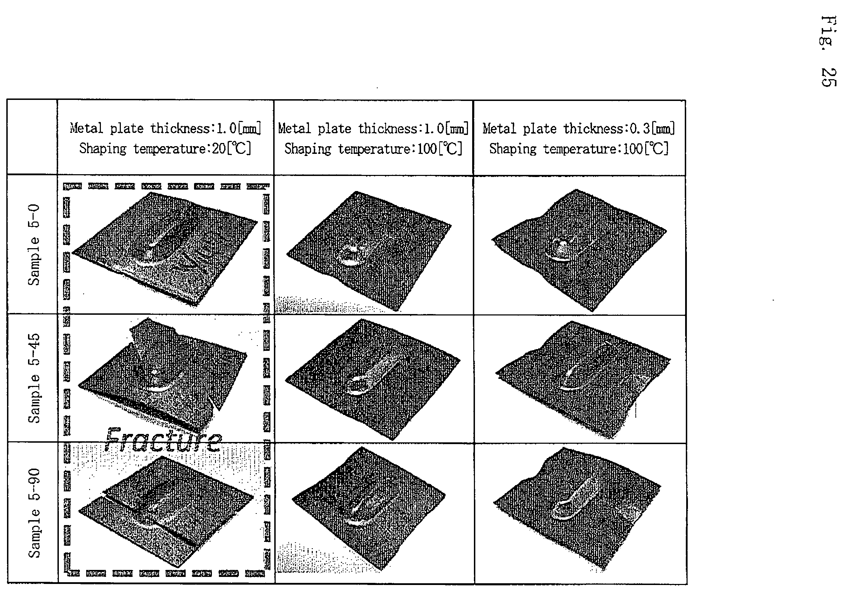

FIG. 25 shows samples of the fiber reinforced composite panels 21 of Example 5, which were shaped at 20 [°C] and 100 [°C] according to the specific example. In FIG. 25, each column shows samples and their thickness of metal plates 22 and their shaping temperatures are 1.0 [mm] and 20 [°C], 1.0 [mm] and 100 [°C], and 0.3 [mm] and 100 [°C] in order from the left, and each line shows samples of Sample 5-0, Sample 5-45, and Sample 5-90 in order from the top.

FIG. 26 shows samples of the fiber reinforced composite panels 21 of Example 6, which were shaped at 20 [°C] and 100 [°C] according to the specific example. In FIG. 26, each column shows samples and their thickness of metal plates 22 and their shaping temperatures are 1.0 [mm] and 20 [°C], 1.0 [mm] and 100 [°C], and 0.3 [mm] and 100 [°C] in order from the left, and each line shows samples of Sample 6-0/90 and Sample 6-45/135 in order from the top.

FIGS. 27(a) and (b) show measured values of drawn depth or height (depth of bottom or height of top of the convex part shaped by drawing process) of the samples shown in FIGS. 25 and 26, respectively.

Samples shown in FIG. 25 illustrate that, in cases of shaping at 20 [°C] or the normal temperature (or room temperature), the fiber reinforced composite panels 21 of Example 5 bear fractures. That is, the fiber reinforced composite panels 21 of Example 5 illustrate that they cannot be drawn at the normal temperature (or room temperature) regardless of the carbon fiber arrangement directions, but can be drawn at 100 [°C].

On the other hand, samples shown in FIG. 26 illustrate that, even in cases of shaping at the normal temperature (or room temperature), the fiber reinforced composite panels 21 of Example 6 can be drawn.

FIG. 27 illustrates that the values of drawn depth become more when the shaping temperatures become higher, since quantities of spring-back of the fiber reinforced composite panels 21 become less.

FIG. 27 illustrates also that the values of drawn depth become less when the metal plates 22 become thicker, since quantities of spring-back of the metal plates 22 on both sides just after drawing become more.

From samples shown in FIGS. 25 and 26, it can be said that, when the fiber reinforced composite panels 21 of Example 5 are shaped with the metal plates 22 attached to their both sides, except at the normal temperature (or room temperature), the fiber reinforced composite panels 21 of good quality as end products can be obtained. Or it can be said that quality of shaping is good.

In the present embodiment, the mechanism of improvement of quality of shaping of the fiber reinforced composite panels 21 is believed as shown in FIG. 28.

Bending strain $\varepsilon_{max}$ at the surface satisfies the following equation (1) for a thin sheet of total thickness t.

[Expression 1]

$$\varepsilon_{max} = \frac{t}{2R_n} = \frac{\rho t}{2} \quad \cdots \quad \text{Equation}(1)$$

Here, $R_n$ and $\rho$ designate radius and curvature of the neutral plane, respectively.

Strain gradient in thickness direction is expressed as the following equation (2).

[Expression 2]

$$\frac{d\varepsilon_b}{dy} = \frac{2\varepsilon_{max}}{t} = 2 \cdot \frac{\rho t}{2} \cdot \frac{1}{t} = \rho \quad \cdots \quad \text{Equation}(2)$$

Here, y designates the value of thickness direction coordinate.

As indicated by a thick line in FIG. 28, strain gradient in thickness direction is uniformly distributed in thickness direction. When necking arises at point B in the fiber reinforced composite panel 21, this necking causes an increase of compression strain in thickness direction and an increase of tensile strain by $\Delta \varepsilon_b{}^B$ in bending direction. Even when necking arises, curvature p of the neutral plane does not vary and the strain in the peripheral direction in the surface of the fiber reinforced composite panel 21 does not vary. Though at adjacent point A, compression strain in thickness direction tends to increase by $\Delta \varepsilon_b{}^A$ for compensating $\Delta \varepsilon_b{}^B$, such increase $\Delta \varepsilon_b{}^A$ of statically indeterminate strain is refrained by the uniformity of strain gradient in thickness direction expressed by the equation (2). Therefore, arising of necking on the surface of the fiber reinforced composite panel 21 is refrained by the uniformity of strain gradient in thickness direction, and, according to the shaping method of the present embodiment, quality of shaping of the fiber reinforced composite panel 21 becomes good.

Also from FIG. 29, it can be said that the fiber reinforced composite panels 21 of good quality as end products are obtained. FIG. 29 shows enlarged photographs of sections of the end product obtained by shaping the fiber reinforced composite panel 21 of Sample 6-45/135 at 100 [°C]. In FIG. 29, (a) shows a cross section of a plane part around a convex part, (b) shows a cross section of a boundary part between a plane part and a convex part periphery, and (c) shows a cross section of a top of convex part. Also, (a-1), (b-1) and (c-1) are schematic depictions showing what part of sections of the end product.

FIGS. 29(a)-(c) illustrate that fine structures of the fiber reinforced composite panels 21 as end products are relatively good with no defect, even though subtle damages of carbon fibers are observed.

Although, in the present embodiment, described are only the examples of drawing the fiber reinforced composite panel 21 into a vessel-like shape with an ellipse-like cross section through a shaping process, according to the shaping method of the present invention, it is possible to shape the fiber reinforced composite panel 21 into a vessel-like various shapes, such as shapes of dish, bowl, cup, etc., by varying faces of metallic dies.

As described above, in the present embodiment, the fiber reinforced composite panel 21 is drawn by the pair of metallic dies in a state where each of its both faces is in contact with a metal plate 22, and the metal plates 22 are detached from the sides of the fiber reinforced composite panel 21 after shaping.

Thereby, even when drawing the fiber reinforced composite panel 21 is processed, appearance of fracture and local irregular deformation, such as necking, in portions of the fiber reinforced composite panel 21 derived from shaping can be surely prevented. Therefore, the fiber reinforced composite panel 21 can be deformed easily, quickly, at low-cost and stably by drawing. Accordingly, good quality products in a variety of shapes can be produced less-expensively and in great quantity.

Next, a third embodiment of the present invention will be described. Structural features similar to the first and second embodiments are denoted by common reference materials, and repeated description of operation and effects similar to those of the first and second embodiments is omitted.

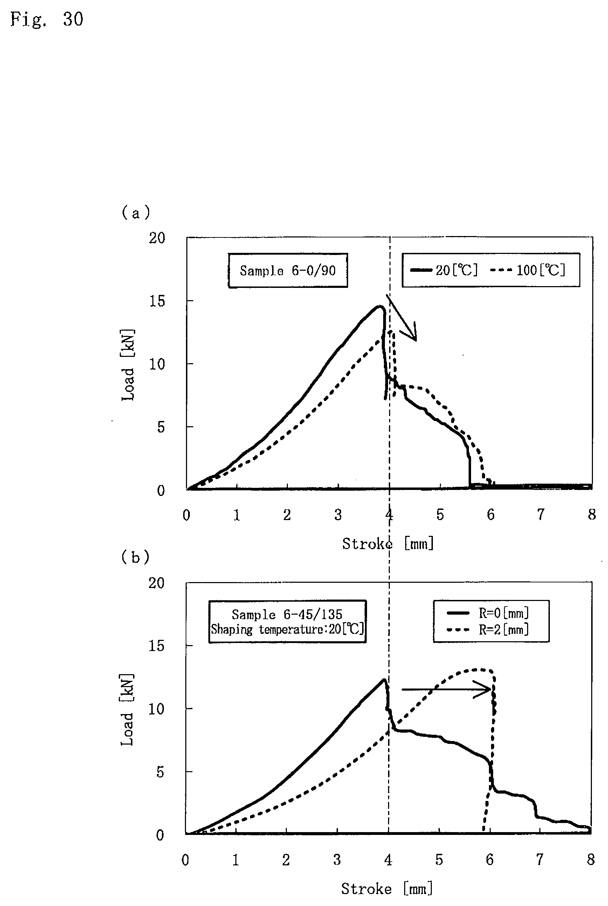

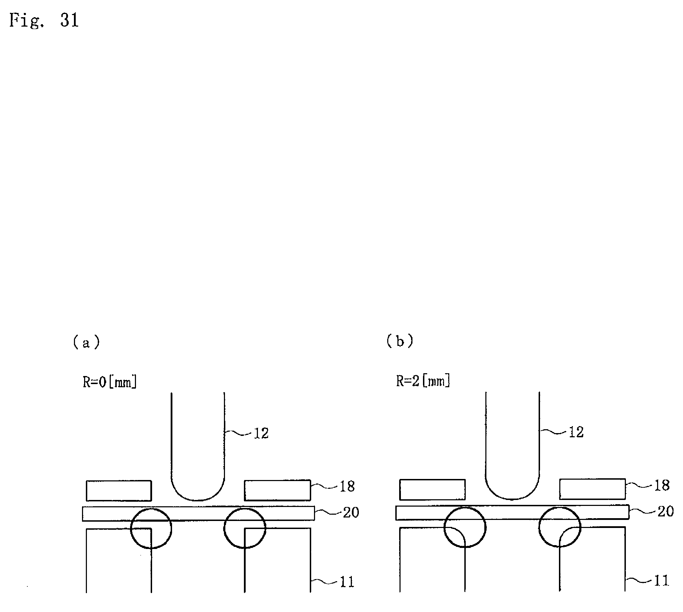

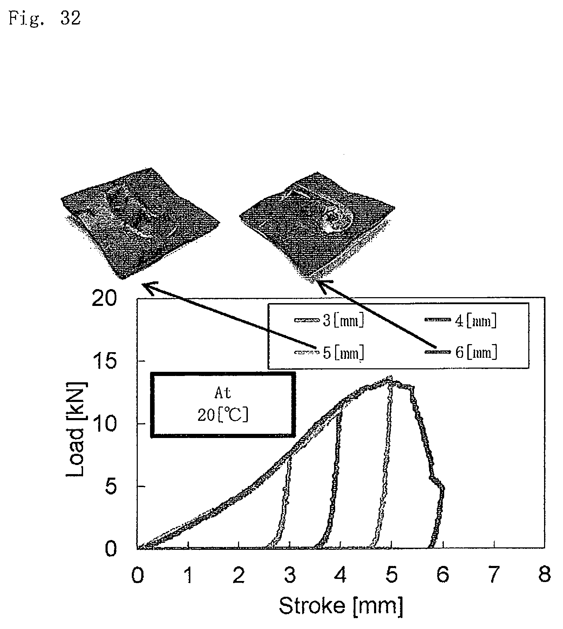

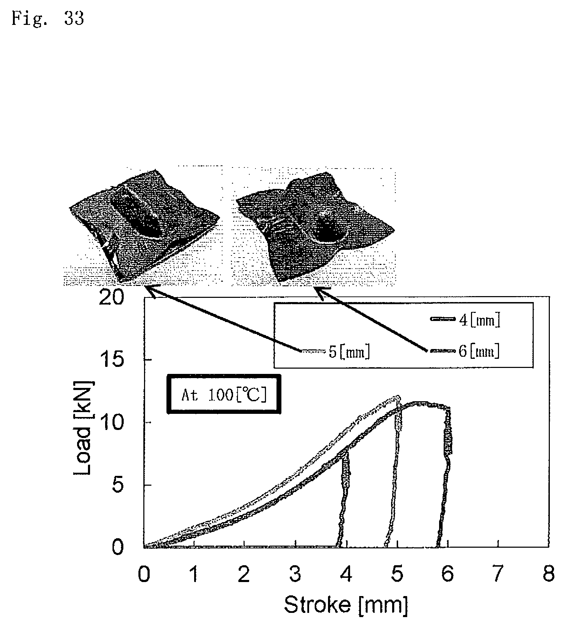

FIG. 30 is a set of first graphs showing measured varying of upper metallic die stroke and shaping load in a third embodiment of the present invention. FIG. 31 is a set of schematic views showing sectional views of metallic dies used for the shaping method of fiber reinforced composite panel in the third embodiment of the present invention. FIG. 32 is a second graph showing measured varying of upper metallic die stroke and shaping load in the third embodiment of the present invention. FIG. 33 is a third graph showing measured varying of upper metallic die stroke and shaping load in the third embodiment of the present invention. In FIG. 30, (a) shows cases where shaping temperatures are changed, and (b) shows cases where periphery shapes of concave of the lower metallic die are altered. In FIG. 31, (a) shows a case where no curve is formed at periphery of concave of the lower metallic die, and (b) shows a case where a curve is formed at periphery of concave of the lower metallic die.

In the second embodiment, described is a drawing to be processed, in the present embodiment will be described a method to improve drawing limit or a method to achieve deep drawing.

In the present embodiment, for the purpose of finding drawing limit, the present inventors have processed drawing with employing the same shaping apparatus 10 as the second embodiment and have continued to lower the upper metallic die 12 even after the material panel 20 has been broken. Until the material panel 20 is broken, the load necessary for lowering the upper metallic die 12 or the shaping load is considered to increase with increase of deformation of the material panel 20, and it is considered to decrease rapidly when the material panel 20 is broken. Therefore, FIG. 30 has been achieved by measuring the lowering amount or the stroke of the upper metallic die 12 and the shaping load, and by plotting the measured results on graphs.

FIG. 30(a) shows a comparison the relation between the stroke and the shaping load in cases where shaping temperatures are varied. A shaping temperature is a set of temperatures of two kinds, such as 20 [°C] and 100 [°C]. The fiber reinforced composite panel 21 is of Sample 6-0/90 described in the second embodiment.

Each of the metal plates 22 attached onto both top and bottom sides of the fiber reinforced composite panel 21 is a stainless steel plate, which is made of austenitic stainless steel, called as SUS304, instead of the steel plate called as SPCC which is employed in the second embodiment. It is because that the metal plate 22 made of austenitic stainless steel is considered not to be broken when the fiber reinforced composite panel 21 is broken, since austenitic stainless steel has a high malleability or ductility and has a high quality of shaping. That is, when the metal plate 22 made of austenitic stainless steel is employed, it considered to become clear that the rapid decrease of the shaping load shown in FIG. 30(a) is entirely derived from breakage of the fiber reinforced composite panel 21. The metal plates 22 in the present embodiment is a square plate of 30 [mm] in length, 30 [mm] in width, and 0.3 [mm] in thickness.

The result of measurement shown in FIG. 30(a) illustrates that, in cases of shaping at 20 [°C] or the normal temperature (or room temperature), the fiber reinforced composite panel 21 breaks at the stroke of 3.7 [mm] or the drawing limit of the fiber reinforced composite panel 21 is 3.7 [mm]. It also illustrates that, in cases of shaping at 100 [°C], the drawing limit of the fiber reinforced composite panel 21 is 4.0 [mm]. That is, it illustrates that raising the shaping temperature from 20 [°C] to 100 [°C] improves the drawing limit of the fiber reinforced composite panel 21.

As shown by an arrow in FIG. 30(a), it also illustrates that raising shaping temperature from 20 [°C] to 100 [°C] brings lower peak value of the shaping load. Further, eye observation has illustrated that raising the shaping temperature from 20 [°C] to 100 [°C] brings lower degree of breakage of the fiber reinforced composite panel 21.

FIG. 30(b) shows comparison of the relation between the stroke and the shaping load in cases of altering periphery shapes of concave of the lower metallic die 11, specifically the case of employing the lower metallic die 11 as shown in FIG. 31(a) and the case of employing the lower metallic die 11 as shown in FIG. 31(b). The lower metallic die 11 as shown in FIG. 31(a) has no curve (R) formed at periphery of its concave or no die-shaping-shoulder R. On the other hand, the lower metallic die 11 as shown in FIG. 31(b) has a curve of R= 2 [mm] formed at periphery of its concave or its die-shaping-shoulder R is 2 [mm].

The shaping temperature is 20 [°C], and the fiber reinforced composite panel 21 is of Sample 6-45/135 described in the second embodiment. The other points including the metal plate 22 are the same as the case shown in FIG. 30(a).

The result of measurement shown in FIG. 30(b) illustrates that, the drawing limit improves by 50 [%] through forming a curve at periphery of the concave of the lower metallic die 11 or forming a die-shaping-shoulder R.

The present inventors have processed shaping of the material panel 20 employing the lower metallic die 11 as shown in FIG. 31(b) or the lower metallic die 11 whose die-shaping-shoulder R is 2 [mm], and have obtained samples shown in FIGS. 32 and 33. FIG. 32 shows results of the cases where the upper metallic die 12 are stopped when its lowering amount or its stroke reaches 3 [mm], 4 [mm], 5 [mm], and 6 [mm], respectively. FIG. 33 shows results of the cases where the upper metallic die 12 are stopped when its lowering amount or its stroke reaches 4 [mm], 5 [mm], and 6 [mm], respectively. The shaping temperature is 20 [°C] in cases of FIG. 32 and is 100 [°C] in cases of FIG. 33. The other points including the fiber reinforced composite panel 21 and the metal plate 22 are the same as the case shown in FIG. 30(a).

The result of measurement shown in FIG. 32 illustrates that, in cases of shaping at 20 [°C], the fiber reinforced composite panel 21 starts cracking when the stroke reaches 5 [mm] and breaks with the metal plate 22 when the stroke reaches 6 [mm].

On the other hand, the result of measurement shown in FIG. 33 illustrates that, in cases of shaping at 100 [°C], the fiber reinforced composite panel 21 does not break even when the stroke reaches 6 [mm]. In these case, the convex parts of drawn fiber reinforced composite panel 21 have a maximum width of 8 [mm] and a drawn height of 6 [mm].

As described above, in the present embodiment, the relation between the stroke and the shaping load is measured with varying the shaping temperature and altering periphery shapes of concave of the lower metallic die 11, and it proves that raising the shaping temperature to 100 [°C] improves the drawing limit and that forming the die-shaping-shoulder R improves the drawing limit.

Therefore, by raising the shaping temperature and by forming the die-shaping-shoulder R, deep drawing can be achieved and more complicated shaping of the fiber reinforced composite panel 21 can be achieved.

Next, a fourth embodiment of the present invention will be described. Structural features similar to the first through third embodiments are denoted by common reference materials, and repeated description of operation and effects similar to those of the first through third embodiments is omitted.

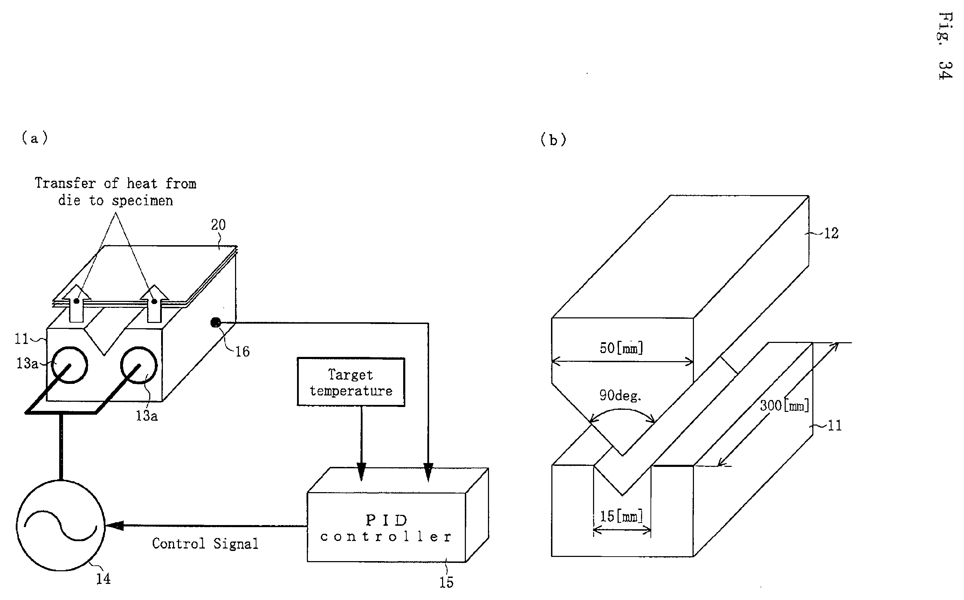

FIG. 34 is a set of views showing a shaping apparatus used for the shaping method of fiber reinforced composite panel in a fourth embodiment of the present invention. In FIG. 34, (a) shows a conceptual diagram of the shaping apparatus, and (b) shows a specific example of metallic dies.

In the first embodiment, described is a shaping for bending the fiber reinforced composite panel 21 into a V-sectional-shape etc., in the present embodiment will be described a shaping for bending a lengthy fiber reinforced composite panel 21 into a V-sectional-shape.

A shaping apparatus 10 according to the present embodiment has a lower metallic die 11 which serves as a fixed die and an upper metallic die 12 which serves as a moving die or a punch. Faces of the lower metallic die 11 and the upper metallic die 12 have shapes, for example, as shown in FIG. 34(b), are the same as FIG. 4 in the first embodiment and are used for bending plate materials at an angle of 90 degrees.

However, in the present embodiment, they are used for bending lengthy plate materials. Therefore, a concave groove with a V-shape cross section of 90 degrees is formed on the face of the lower metallic die 11, so that the concave groove extends through the face of 300 [mm] in length. And a width of the concave groove is 15 [mm]. The upper metallic die 12 has a width of 50 [mm], its face has a shape of is a convex streak with a V-shape cross section of 90 degrees, and its length is the same as the face of the lower metallic die 11.

The heating device for heating the fiber reinforced composite panel 21 may be a set of induction heating coils 13 disposed on the sides of the lower metallic die 11 and the upper metallic die 12 as well as the first embodiment, though it would be difficult from a viewpoint of space to dispose induction heating coils 13 on the sides of the lower metallic die 11 and the upper metallic die 12 of as long as 300 [mm] in length. Therefore, in the present embodiment, electric heaters 13a, such as ceramic heaters, or sheath heaters, are laid in the lower metallic die 11, so that the lower metallic die 11 is heated, then the fiber reinforced composite panel 21 is heated indirectly through thermal conduction from the lower metallic die 11 and the metal plates 22. Typically, each of the electric heaters 13a is preferably laid in the lower metallic die 11 on each side of the concave groove so that the lengthy electric heaters 13a extend through the lower metallic die 11, as shown in FIG. 34(a). Though, the electric heaters 13a may take any forms, may be in any number, and may be dispose anywhere as long as they can heat the fiber reinforced composite panel 21.

Other points in structures and operations of the shaping apparatus 10 and other points in the method of shaping are similar to those explained in the first embodiment, therefore description about them is omitted.

Next will be described the fiber reinforced composite panels 21 actually shaped according to the present embodiment.

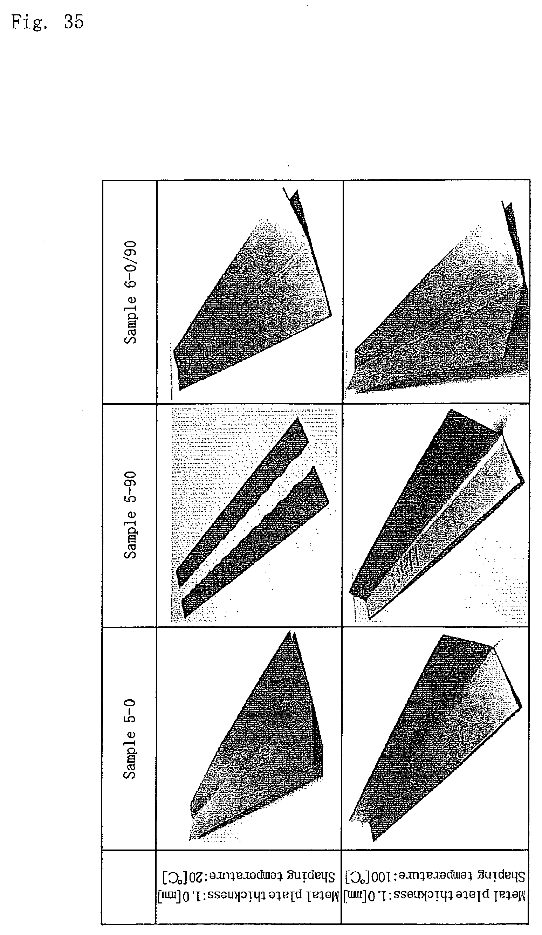

FIG. 35 is a set of photographs showing examples in the fourth embodiment of the present invention.

The fiber reinforced composite panels 21 used in the present embodiment are of Sample 5-0, Sample 5-90, and Sample 6-0/90 described in the second embodiment. Each of the fiber reinforced composite panels 21 is a lengthy strip of a size of 300 [mm] in length and 50 [mm] in width. Each of the metal plates 22 is a steel plate called as SPCC, specifically a cold-rolled steel plate of 1.0 [mm] in thickness stipulated in JISG3141, as well as the first embodiment, though it is a lengthy strip of a size of 300 [mm] in length and 50 [mm] in width. Each of the fiber reinforced composite panels 21 is placed for being processed on the face of the lower metallic die 11 in such a position as its lateral direction in FIG. 24(c) corresponds to the width direction (lateral direction in FIG. 34(b)) of the upper metallic die 12 and the lower metallic die 11.

FIG. 35 shows samples of the fiber reinforced composite panels 21 of Sample 5-0, Sample 5-90, and Sample 6-0/90, which were shaped at 20 [°C] and 100 [°C] according to the present embodiment. In FIG. 35, each column shows samples of Sample 5-0, Sample 5-90, and Sample 6-0/90 in order from the left, and each line shows samples and their thickness of metal plates 22 and their shaping temperatures are 1.0 [mm] and 20 [°C], and 1.0 [mm] and 100 [°C] in order from the top.

Samples shown in FIG. 35 illustrate that, in cases of shaping those of Sample 5-90 at 20 [°C] or the normal temperature (or room temperature), the fiber reinforced composite panels 21 are torn. This is considerably because carbon fibers arranged in a direction perpendicular with the ridge part of the convex streak with V-shape section in the face of the upper metallic die 12 are broken. On the other hand, the fiber reinforced composite panels 21 of Sample 5-0 and Sample 6-0/90 have been shaped without breakage even with a large quantity of spring-back.

On the other hand, in cases of shaping at 100 [°C], all the fiber reinforced composite panels 21 of Sample 5-0, Sample 5-90, and Sample 6-0/90 have been shaped.

Although, in the present embodiment, described are only the examples of bending the fiber reinforced composite panel 21 into a member of a V-shape cross section, according to the shaping method of the present embodiment, it is possible to bend the fiber reinforced composite panel 21 into a member of a variety of cross sectional shapes, such as a U-shape or a hut-shape, a wave-like shape, by varying faces of metallic dies.

As described above, in the present embodiment, employed is a lower metallic die 11 having a concave groove with a V-shape cross section formed on its elongated face, so that the concave groove extends through the face in its longitudinal direction. Thereby, even an elongated lengthy fiber reinforced composite panel 21 can be bent in its width direction through its full length.

Next, a fifth embodiment of the present invention will be described. Structural features similar to the first through fourth embodiments are denoted by common reference materials, and repeated description of operation and effects similar to those of the first through fourth embodiments is omitted.

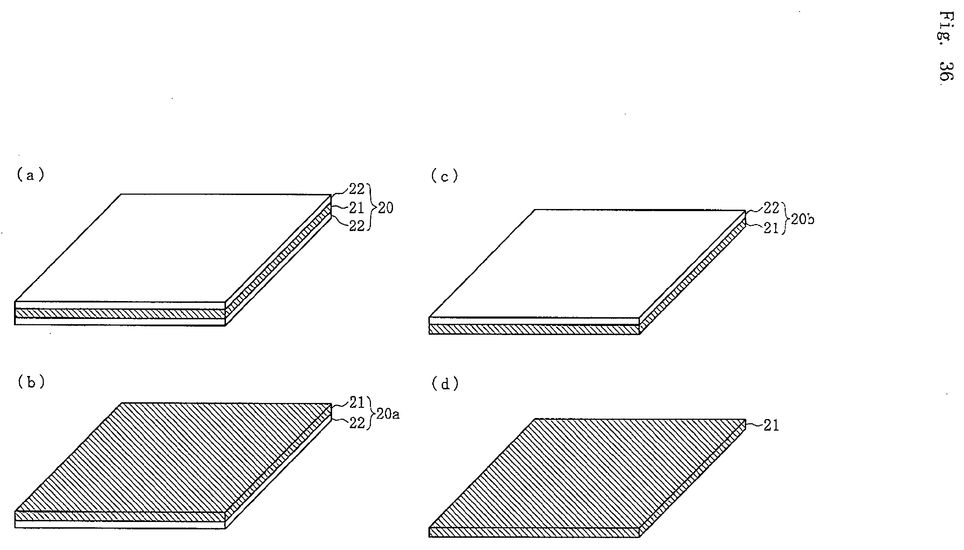

FIG. 36 is a set of views illustrating material panels for shaping in a fifth embodiment of the present invention. In FIG. 36, (a) shows a perspective view of a material panel with metal plates attached to both sides of its fiber reinforced composite panel, (b) shows a perspective view of a material panel with a metal plate attached to lower side of its fiber reinforced composite panel, (c) shows a perspective view of a material panel with a metal plate attached to upper side of its fiber reinforced composite panel, and (d) shows a perspective view of a material panel without any metal plate attached to its fiber reinforced composite panel.

In the first thorough fourth embodiments, described are the shaping in situations where the metal plates 22 are attached to both sides of each of the fiber reinforced composite panels 21, in the present embodiment will be described a shaping in a situation where a metal plate 22 is attached to either side of a fiber reinforced composite panel 21.

In the first thorough fourth embodiments, bending and drawing are processed with employing material plates 20 having fiber reinforced composite panels 21 and metal plates 22 attached to their both sides as shown in FIG. 36(a). Thereby, it is illustrated that appearance of fracture and local irregular deformation, such as necking, in portions of the fiber reinforced composite panel 21 derived from shaping can be surely prevented.

In the present embodiment, the present inventors have processed the shaping with employing a first simplified material plate 20a having a fiber reinforced composite panels 21 and only one metal plate 22 attached to its back side or lower side (face of the lower metallic die 11 side) as shown in FIG. 36(b), and a second simplified material plate 20b having a fiber reinforced composite panels 21 and only one metal plate 22 attached to its front side or upper side (face of the upper metallic die 12 side) as shown in FIG. 36(c). That is, they have processed the shaping in a state where one of metal plates 22 is omitted and the other of metal plates 22 is attached to one side of a fiber reinforced composite panels 21. Also, for reference, they have processed with employing a fiber reinforced composite panel 21 without any metal plate 22 attached thereto as shown in FIG. 36(d).

First will be described the case of drawing.

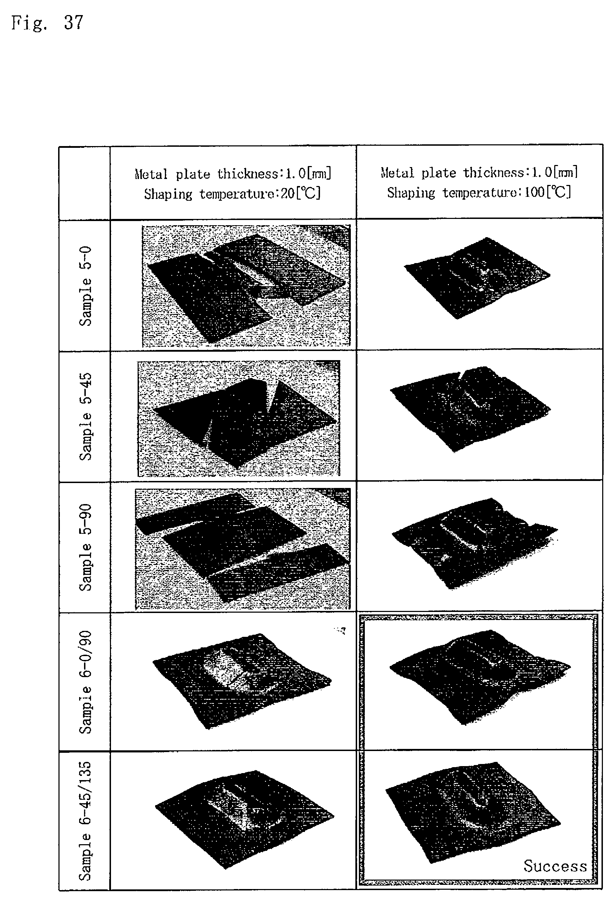

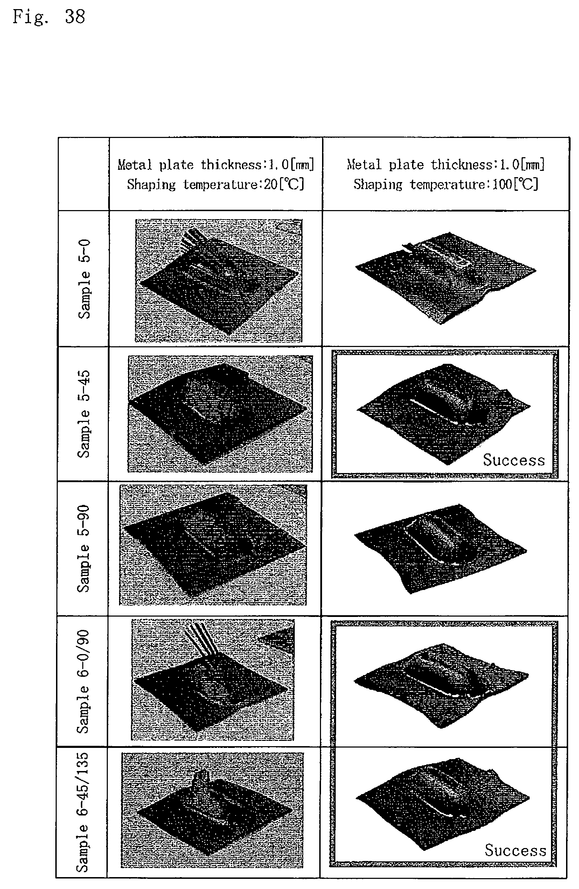

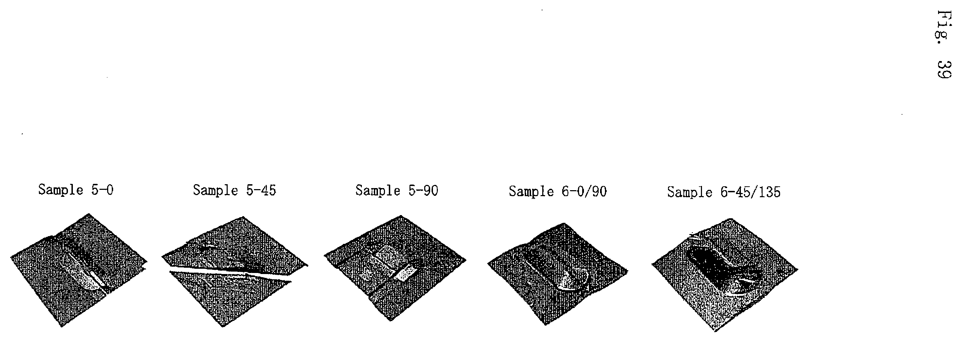

FIG. 37 is a set of photographs showing examples resulted from drawing first simplified material plates in the fifth embodiment of the present invention. FIG. 38 is a set of photographs showing examples resulted from drawing second simplified material plates in the fifth embodiment of the present invention. FIG. 39 is a set of photographs showing reference examples resulted from drawing without using a metal plate in the fifth embodiment of the present invention.

In this case, the present inventors have processed drawing with employing the same shaping apparatus 10 and the same method of shaping as the second embodiment. The fiber reinforced composite panels 21 used are of Sample 5-0, Sample 5-45, Sample 5-90, Sample 6-0/90, and Sample 6-45/135 described in the second embodiment. Each of the metal plates 22 is a square plate of 30 [mm] in length, 30 [mm] in width, and 1.0 [mm] in thickness, which is steel called as SPCC, and is a cold-rolled steel plate stipulated in JISG3141, as described in the second embodiment.

FIG. 37 shows samples of the first simplified material plates 20a as shown in FIG. 36(b), which were shaped at 20 [°C] and 100 [°C]. FIG. 38 shows samples of the second simplified material plates 20b as shown in FIG. 36(c), which were shaped at 20 [°C] and 100 [°C]. FIG. 39, for reference, shows samples of the fiber reinforced composite panels 21 without any metal plate 22 attached thereto as shown in FIG. 36(d), which were shaped at 100 [°C].

In FIGS. 37 and 38, each column shows samples and their shaping temperatures are 20 [°C] and 100 [°C] in order from the left, and each line shows samples of Sample 5-0, Sample 5-45, Sample 5-90, Sample 6-0/90, and Sample 6-45/135 in order from the top. FIG. 39 shows samples of Sample 5-0, Sample 5-45, Sample 5-90, Sample 6-0/90, and Sample 6-45/135 in order from the left.

Samples shown in FIG. 37 illustrate that, in cases of shaping the fiber reinforced composite panels 21 of Sample 6-0/90 and Sample 6-45/135 at 100 [°C], the shaping have been processed successfully. That is, it is illustrated that, when using the samples of Example 6, drawing the fiber reinforced composite panels 21 can be processed at 100 [°C] even though metal plates 22 being attached only to their lower sides.

Samples shown in FIG. 38 illustrate that, in cases of shaping the fiber reinforced composite panels 21 of Sample 5-45, Sample 6-0/90, and Sample 6-45/135 at 100 [°C], the shaping have been processed successfully. That is, it is illustrated that, when using the samples of Sample 5-45 and Example 6, drawing the fiber reinforced composite panels 21 can be processed at 100 [°C] even though metal plates 22 being attached only to their upper sides.

Samples shown in FIG. 39 illustrate that, in all the cases of shaping those of Sample 5-0, Sample 5-45, Sample 5-90, Sample 6-0/90, and Sample 6-45/135, the fiber reinforced composite panels 21 are broken. That is, it is illustrated that drawing the fiber reinforced composite panels 21 cannot be processed at 100 [°C], unless metal plates 22 being attached to them.

Next will be described the case of bending.

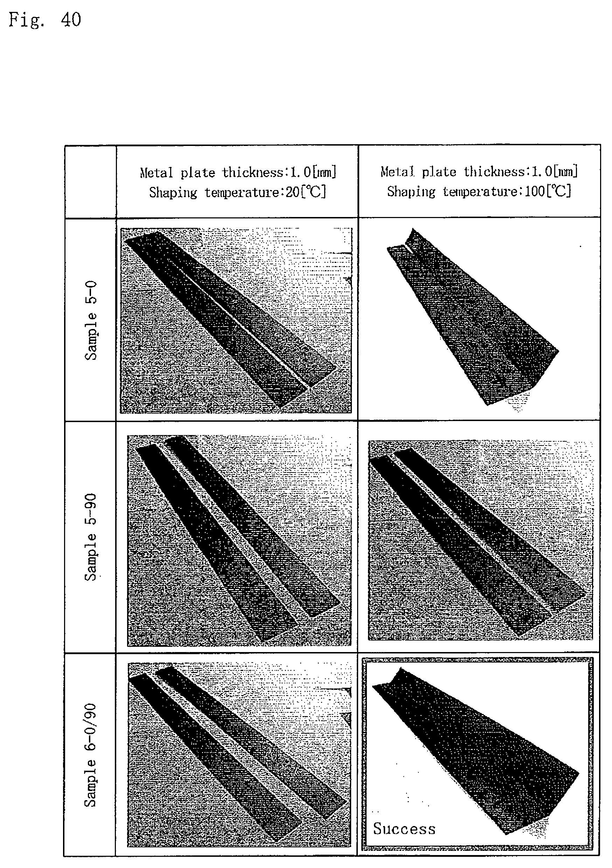

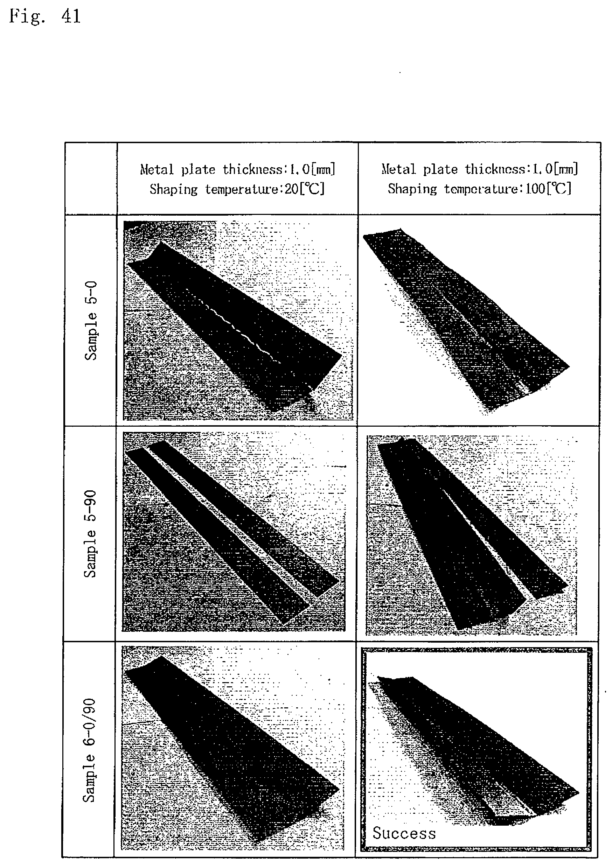

FIG. 40 is a set of photographs showing examples resulted from bending first simplified material plates in the fifth embodiment of the present invention. FIG. 41 is a set of photographs showing examples resulted from bending second simplified material plates in the fifth embodiment of the present invention.

In this case, the present inventors have processed bending with employing the same shaping apparatus 10 and the same method of shaping as the fourth embodiment. The fiber reinforced composite panels 21 used are of Sample 5-0, Sample 5-90, and Sample 6-0/90, as well as the fourth embodiment, and each of them is a lengthy strip of 300 [mm] in length and 50 [mm] in width. Each of the metal plates 22 is a lengthy strip of 300 [mm] in length, 50 [mm] in width, and 1.0 [mm] in thickness, which is steel called as SPCC and is a cold-rolled steel plate stipulated in JISG3141, as well as the fourth embodiment.

FIG. 40 shows samples of the first simplified material plates 20a as shown in FIG. 36(b), which were shaped at 20 [°C] and 100 [°C]. FIG. 41 shows samples of the second simplified material plates 20b as shown in FIG. 36(c), which were shaped at 20 [°C] and 100 [°C].

Samples shown in FIG. 40 illustrate that, in cases of shaping the fiber reinforced composite panels 21 of Sample 6-0/90 at 100 [°C], the shaping have been processed successfully. That is, it is illustrated that, when using the samples of Example 6, bending the fiber reinforced composite panels 21 can be processed at 100 [°C] even though metal plates 22 being attached only to their lower sides.

Samples shown in FIG. 41 illustrate that, in cases of shaping the fiber reinforced composite panels 21 of Sample 6-0/90 at 100 [°C], the shaping have been processed successfully. That is, it is illustrated that, when using the samples of Example 6, bending the fiber reinforced composite panels 21 can be processed at 100 [°C] even though metal plates 22 being attached only to their upper sides.

As described above, in the present embodiment, it proves that drawing and bending the fiber reinforced composite panels 21 can be processed at 100 [°C] when metal plates 22 being attached to their either side.

Therefore, only one metal plate 22 may be needed for shaping each of the fiber reinforced composite panels 21. Accordingly, the fiber reinforced composite panels 21 can be deformed at lower-cost and stably, then, good quality products in a variety of shapes can be produced less-expensively and in great quantity.

Although, in the first through fifth embodiments, described are only the examples of bending the fiber reinforced composite panel 21 into a member of a V-shape, a U-shape or a hat-shape cross section and of drawing it into a member of a vessel-like shape through a shaping process, according to the shaping method of the present invention, it is possible to shape the fiber reinforced composite panel 21 into a member of a variety of other shapes by varying faces of metallic dies.

The present invention is not limited to the above embodiments, but may be diversely modified and varied within the scope of the appended claims. Thus, the modifications and variations are not excluded from the scope of protection oh the present invention.

INDUSTRIAL APPLICABILITY

The present invention is applicable to a shaping method of fiber reinforced composite panel.

DESCRIPTION OF REFERENCE NUMERALS

10:    Shaping apparatus
11:    Lower metallic die
12:    Upper metallic die
18:    Auxiliary die
21:    Fiber reinforced composite panel
22:    Metal plate

**Claims**

**1.** A method of bending or drawing a fiber-reinforced composite panel (21) into a shape, by using a lower metallic die (11) and an upper metallic die (12), wherein the method comprises the steps of:

1.1 putting a metal plate (22) on at least one side face of the fiber-reinforced composite panel (21);
1.2 placing the fiber-reinforced composite panel (21) with the metal plate (22) between the dies (11, 12) in a state where at least one side face of the fiber-reinforced composite panel (21) is in contact with the metal plate (22);
1.3 heating the metal plate (22) so that the fiber-reinforced composite panel (21) is heated indirectly by the metal plate (22);
1.4 closing and clamping the dies (11, 12) so that the fiber-reinforced composite panel (21) and the metal plate (22) are bent or drawn into the V-shape or the U-shape or the concave shape;
1.5 opening the dies (11, 12); and
1.6 detaching the metal plate (22) from the fiber-reinforced composite panel (21)

**characterized in that** the shape is a V-shape or a U-shape or a concave shape and that the bending or drawing is performed by the upper and the lower die.

**2.** The method according to claim 1, **characterized in that**, after heating the fiber-reinforced composite panel (21) to a predetermined temperature, closing the dies (11, 12) so that the fiber-reinforced composite panel (21) is cooled.

**3.** The method according to claim 2, **characterized in that**, after heating the fiber-reinforced composite panel (21) to the predetermined temperature, still heating the fiber-reinforced composite panel (21) until an initial stage of clamping the dies (11, 12) so that the fiber-reinforced composite panel (21) is maintained at the predetermined temperature.

**4.** The method according to any one of claims 1-3, **characterized in that** the fiber-reinforced composite panel (21) is a plate-shaped composite, which is made by impregnating fibers as reinforcing material with a resin as matrix.

**Patentansprüche**

**1.** Verfahren zum Biegen oder Ziehen einer faserverstärkten Verbundplatte (21) in eine Form mittels einer unteren Metallform (11) und einer oberen Metallform (12), wobei das Verfahren die Schritte umfasst:

1.1 Anordnen einer Metallplatte (22) auf mindestens einer Seitenfläche der faserverstärkten Verbundplatte (21);
1.2 Anordnen der faserverstärkten Verbundplatte (21) mit der Metallplatte (22) zwischen den Formen (11, 12) in einem Zustand, in dem mindestens eine Seitenfläche der faserverstärkten Verbundplatte (21) mit der Metallplatte (22) in Berührung ist;
1.3 Erwärmen der Metallplatte (22), so dass die faserverstärkte Verbundplatte (21) durch die Metallplatte (22) indirekt erwärmt wird;
1.4 Schließen und Zusammenpressen der Formen (11, 12), so dass die faserverstärkte Verbundplatte (21) und die Metallplatte (22) in eine V-Form, eine U-Form oder eine konkave Form gebogen oder gezogen werden;

1.5 Öffnen der Formen (11, 12) und

1.6 Lösen der Metallplatte (22) von der faserverstärkten Verbundplatte (21),

**dadurch gekennzeichnet, dass** die Form eine V-Form, eine U-Form oder eine konkave Form ist und das Biegen oder Ziehen durch die obere und untere Form erfolgt.

2. Verfahren nach Anspruch 1, **dadurch gekennzeichnet, dass** nach dem Erwärmen der faserverstärkten Verbundplatte (21) auf eine vorbestimmte Temperatur die Formen (11, 12) geschlossen werden, so dass die faserverstärkte Verbundplatte (21) abkühlt.

3. Verfahren nach Anspruch 2, **dadurch gekennzeichnet, dass** nach dem Erwärmen der faserverstärkten Verbundplatte (21) auf die vorbestimmte Temperatur die faserverstärkte Verbundplatte (21) noch bis zu einem Anfangsstadium des Zusammenpressens der Formen (11, 12) weiter erwärmt wird, so dass die faserverstärkte Verbundplatte (21) bei der vorbestimmten Temperatur gehalten wird.

4. Verfahren nach einem der Ansprüche 1-3, **dadurch gekennzeichnet, dass** die faserverstärkte Verbundplatte (21) ein plattenförmiger Verbundstoff ist, der durch Imprägnieren von Fasern als Verstärkungsmaterial mit einem Harz als Matrix hergestellt wird.

**Revendications**

1. Un procédé de pliage ou d'étirage d'un panneau en composite renforcé par fibre (21) en une forme, à l'aide d'une matrice inférieure métallique (11) et une matrice supérieure métallique (12), où le procédé comprend les étapes de :

1.1 pose d'une plaque en métal (22) sur au moins une face latérale du panneau en composite renforcé par fibre (21) ;

1.2 mise en place du panneau en composite renforcé par fibre (21) avec la plaque en métal (22) entre les matrices (11, 12) dans un état où au moins une face latérale du panneau en composite renforcé par fibre (21) est en contact avec la plaque en métal (22) ;

1.3 chauffage de la plaque en métal (22) pour que le panneau en composite renforcé par fibre (21) soit chauffé indirectement par la plaque en métal (22) :

1.4 fermeture et fixation des matrices (11, 12) pour que le panneau en composite renforcé par fibre (21) et la plaque en métal (22) soient pliés ou étirés en forme de V ou en forme de U ou en forme concave ;

1.5 ouverture des matrices (11, 12) ; et

1.6 détachement de la plaque en métal (22) du panneau en composite renforcé par fibre (21)

**Caractérisé en ce que** la forme soit en forme de V ou en forme de U ou en forme concave et que le pliage ou l'étirage soit effectué par la matrice supérieure et inférieure.

2. Le procédé selon la revendication 1, **caractérisé en ce que** après le chauffage du panneau en composite renforcé par fibre (21) à une température prédéterminé, fermeture des matrices (11, 12) pour que le panneau en composite renforcé par fibre (21) soit refroidi.

3. Le procédé selon la revendication 2, **caractérisé en ce que**, après le chauffage du panneau en composite renforcé par fibre (21) à la température prédéterminée, chauffage à nouveau du panneau en composite renforcé par fibre (21) jusqu'à une étape initiale de fixation des matrices (11, 12) pour que le panneau en composite renforcé par fibre (21) soit maintenu à la température prédéterminée.

4. Le procédé selon l'une des revendications 1-3, **caractérisé en ce que** le panneau en composite renforcé par fibre (21) est un composite en forme de plaque, qui est composé en imprégnant des fibres en tant que matériau de renfort avec une résine comme matrice.

Fig. 1

Fig. 2

(a)

(b)

Fig. 3

(a)

32～

25～

31～

(b)

32

31

(c)

21

(d)

20{ 22～
   21～
   22～

13～

15～ controller

(e)

12～

20{ 22～
   21～
   22～

11～

(f)

21

Fig. 4

Fig. 5

21

$90+\theta$

Fig. 6

Fig. 7

Fig. 8

(a)

(b)

Fig. 9

(a)

(b)

(c)

Fig. 10

Fig. 11

Fig. 12

Fig. 13

(a)

(a−1)

(b)

(b−1)

Fig. 14

Fig. 15

Fig. 16

Fig. 17

Fig. 18

Fig. 19

(b)

(a)

Fig. 20

Fig. 21

Fig. 22

Fig. 23

(a)

(b)

Fig. 24

EP 2 743 062 B1

(a)

(b)

(c)

Example 5

Prepreg (t=0.1[mm])

solidifying by autoclave

Thickness:0.3[mm] (Same direction)

Sample 5-0

Sample 5-45

Sample 5-90

Example 6

Thickness:0.5[mm] (Perpendicular direction)

Sample 6-0/90

Sample 6-45/135

Fig. 25

Fig. 26

Fig. 27

Fig. 28

Fig. 29

EP 2 743 062 B1

(a-1)  (b-1)  (c-1)

(a)  ──── 0.1[mm]  (b)  ──── 0.1[mm]  (c)  ──── 0.1[mm]

Fig. 30

(a)

(b)

Fig. 31

(a)

R=0 [mm]

~12

~18

~20

~11

(b)

R=2 [mm]

~12

~18

~20

~11

Fig. 32

Fig. 33

Fig. 34

EP 2 743 062 B1

56

(a)

Transfer of heat from
die to specimen

20

11

13a

13a

16

Target
temperature

PID
controller

15

Control Signal

14

(b)

12

50[mm]

90deg.

300[mm]

11

15[mm]

Fig. 35

Fig. 36

Fig. 37

| | Metal plate thickness:1.0[mm] Shaping temperature:20[℃] | Metal plate thickness:1.0[mm] Shaping temperature:100[℃] |
|---|---|---|
| Sample 5-0 | | |
| Sample 5-45 | | |
| Sample 5-90 | | |
| Sample 6-0/90 | | |
| Sample 6-45/135 | | Success |

Fig. 38

| | Metal plate thickness:1.0[mm] Shaping temperature:20[℃] | Metal plate thickness:1.0[mm] Shaping temperature:100[℃] |
|---|---|---|
| Sample 5-0 | | |
| Sample 5-45 | | Success |
| Sample 5-90 | | |
| Sample 6-0/90 | | |
| Sample 6-45/135 | | Success |

Fig. 39

Sample 5-0  Sample 5-45  Sample 5-90  Sample 6-0/90  Sample 6-45/135

Fig. 40

| | Metal plate thickness:1.0[mm]<br>Shaping temperature:20[℃] | Metal plate thickness:1.0[mm]<br>Shaping temperature:100[℃] |
|---|---|---|
| Sample 5-0 | | |
| Sample 5-90 | | |
| Sample 6-0/90 | | <br>Success |

Fig. 41

| | Metal plate thickness: 1.0[mm] Shaping temperature: 20[℃] | Metal plate thickness: 1.0[mm] Shaping temperature: 100[℃] |
|---|---|---|
| Sample 5-0 | | |
| Sample 5-90 | | |
| Sample 6-0/90 | | Success |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009184239 A

- US 5530227 A